(19) Europäisches Patentamt

European Patent Office

Office européen des brevets

(11) **EP 1 195 013 B1**

(12) **EUROPEAN PATENT SPECIFICATION**

(45) Date of publication and mention
of the grant of the patent:
**03.12.2003  Bulletin 2003/49**

(21) Application number: **00946778.8**

(22) Date of filing: **07.06.2000**

(51) Int Cl.⁷: $H04B\ 1/707$, $H04L\ 5/02$

(86) International application number:
**PCT/US00/15500**

(87) International publication number:
**WO 01/001584 (04.01.2001 Gazette 2001/01)**

(54) **COMMUNICATIONS SYSTEM AND METHOD FOR MULTI-CARRIER ORTHOGONAL CODING**

ÜBERTRAGUNGSSYSTEM UND VERFAHREN ZUR ORTHOGONALEN MEHRTRÄGERKODIERUNG

SYSTEME ET PROCEDE DE COMMUNICATION POUR CODAGE ORTHOGONAL A PORTEUSES MULTIPLES

(84) Designated Contracting States:
**AT BE CH CY DE DK ES FI FR GB GR IE IT LI LU MC NL PT SE**

(30) Priority: **28.06.1999  US 340907**

(43) Date of publication of application:
**10.04.2002  Bulletin 2002/15**

(73) Proprietor: **Ericsson Inc.**
**Research Triangle Park, N.C. 27709 (US)**

(72) Inventor: **DENT, Paul, W.**
**Pittsboro, NC 27312 (US)**

(74) Representative: **Stenborg, Anders Vilhelm et al**
**Aros Patent AB,**
**P.O. Box 1544**
**751 45 Uppsala (SE)**

(56) References cited:
**EP-A- 0 837 565       EP-A- 0 929 161**
**US-A- 4 296 374**

- **WON-SIK YOUN ET AL: "ORTHOGONAL MULTI-CARRIER CDMA SYSTEM USING A CONCATENATED ORTHOGONAL/PN SPREADING SCHEME" ELECTRONICS LETTERS,IEE STEVENAGE,GB, vol. 32, no. 25, 5 December 1996 (1996-12-05), pages 2318-2320, XP000685317 ISSN: 0013-5194**
- **XU W ET AL: "ON THE PERFORMANCE OF MULTICARRIER RAKE SYSTEMS" PHOENIX, ARIZONA, NOV. 3 - 8, 1997,NEW YORK, IEEE,US, 3 November 1997 (1997-11-03), pages 295-299, XP000737553 ISBN: 0-7803-4199-6**
- **OCHIAI H ET AL: "FORWARD ERROR CORRECTION WITH REDUCTION OF PEAK TO AVERAGE POWER RATIO OF QPSK MULTICARRIER SIGNALS" PROCEEDINGS IEEE INTERNATIONAL SYMPOSIUM ON INFORMATION THEORY, 29 June 1997 (1997-06-29), XP000199436**

EP 1 195 013 B1

**Description**

CROSS-REFERENCE TO RELATED APPLICATIONS

This application is a continuation-in-part of U.S. Patent Nos. 6,215,762 to Dent, filed July 22, 1997 and entitled "Communication System and Method with Orthogonal Block Encoding" and 6,359,874 to Dent, filed May 21, 1998 and entitled "Partially Block-Interleaved CDMA Coding and Decoding".

FIELD OF THE INVENTION

The present invention is directed toward spread-spectrum radio communications systems that transmit messages with large amounts of redundant coding to provide discrimination of one signal from overlapping signals and, more particularly, toward improved orthogonal coding techniques for coding messages over more than one channel, for example, when the message is spread over more than one frequency channel as in multi-carrier CDMA (Code Division Multiple Access) systems.

BACKGROUND OF THE INVENTION

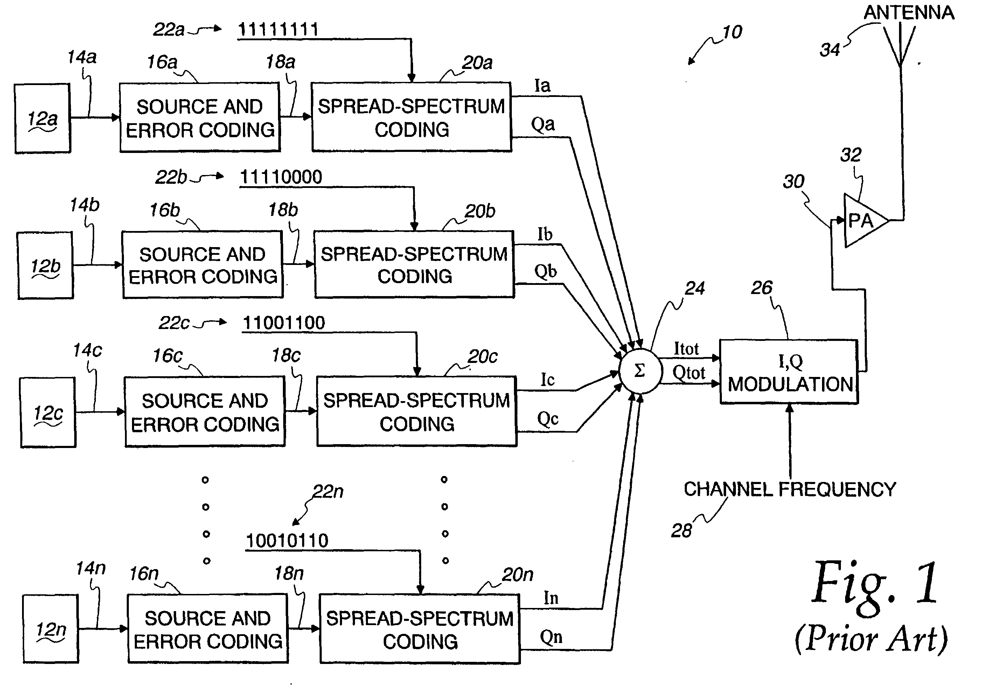

Fig. 1 illustrates a prior art orthogonal transmitter, shown generally at 10, including a plurality of information sources 12a-n generating information signals 14a-n, which are received by respective source and error coding units or coders 16a-n. The source and error coding units 16a-n conventionally source and error code the received information signals 14an, producing digitally coded information streams 18a-n. Source coding involves converting information to digital form, for example, Analog to Digital conversion of speech, and optionally compressing the digital information using a compression algorithm adapted to the particular type of information, such as speech, FAX, images, etc. Error coding involves expanding the source coded digital data by adding redundancy, which enables errors to be corrected and/or detected by a receiver. If desired, the source and error coding units 16a-n may also encrypt the coded information using a key unique to each information source 12a-n.

In FDMA (Frequency Division Multiple Access) systems, each digitally coded information stream 18a-n from the coders 16a-n is modulated onto a respective frequency channel. Sufficient channel spacing is chosen such that signals on neighboring frequency channels do not interfere with one another and are easily distinguishable by receiver filters. Typically, the channel spacing is slightly greater than the spectral occupancy of the transmitted signal, the excess being regarded as a "guard band" in the frequency plane to allow for factors such as frequency error, *etc*.

In TDMA (Time Division Multiple Access) systems, each digitally coded information stream 18a-n from the coders 16a-n is modulated onto a respective radio frequency channel in a respective timeslot of a TDMA frame period. The use of a small guard time between timeslots ensures that signals in different timeslots do not interfere with one another even when delayed echos of the transmitted signal are received due to multi-path propagation. However, to ensure non-interference between signals, the echo delay must not be greater than the guard time between timeslots.

The non-interference property between different channels of an FDMA system, or different timeslots of a TDMA system, is typically referred to as "orthogonality" between channels. In FDMA and TDMA systems, orthogonality is maintained during signal propagation from the transmitter to the receiver, i.e., unaffected by multi-path propagation, so long as the necessary interslot guard times are utilized. In TDMA systems, the information source signals are multiplexed together and modulated at a higher bitrate onto a carrier. The multiplexed/modulated signal is demodulated by a receiver using an equalizer to compensate for multi-path propagation. The demodulated bits are then partitioned into the different original source information streams. This also represents orthogonality between channels even though no intra-timeslot guard time is used.

In direct-sequence spread-spectrum systems, also known as CDMA systems (see Fig. 1), each digitally coded information stream 18a-n from the coders 16a-n is combined in spread-spectrum coders 20a-n with a respective access code 22a-n that expands the symbol rate of the information stream 18a-n by an amount known as the spreading factor. The symbols, or modulation intervals, of the expanded signal are commonly known as chips, and there are usually an integer number of chips produced for each digitally coded symbol from me coders 16a-n, with the number of chips per symbol equal to the spreading factor.

In orthogonal CDMA systems, the access codes 22a-n with which the digitally coded information streams 18a-n are combined are mutually orthogonal to each other and jointly form a set of orthogonal codes. When the spreading factor is equal to a power of two, a suitable set of orthogonal access codes are the Walsh-Hadamard codes, *i.e.*, Walsh codes. Fig. 1 illustrates 8-bit Walsh codes 22a-n that may be used when the spreading factor is equal to eight. The Walsh codes 22a-n are orthogonal since between any two codes, half of the bits are the same and the other half are of opposite polarity. This results in the cross-correlation between any two different codes being theoretically zero. It should be noted that since code 11111111 is illustrated for code 22a, the code 00000000 would not be a part of the Walsh-Hadamard code sequence, since orthogonality between codes would not be sustained. Further, orthogonality is maintained only if the Walsh codes are exactly time-aligned. Time-misaligned codes are not necessarily orthogonal to each other. Therefore, a delayed echo of one code received due to multi-path propagation is not generally orthogonal to the other undelayed codes, resulting in unwanted interference.

The European Patent Application EP-A-0 837 565 discloses a CDMA transmitter in which a plurity of modulated signals are generated for a data stream. Each modulated signal, containing all of the information in the data stream, is generated at a different carrier frequency. The modulated signals are then combined for transmission as a multi-band signal. The wideband data streams are combined with code sequences that are based on the same Walsh code sequences used to genereate IS-95 signals.

The European Patent Application EP-A-0 929 161 describes a wideband CDMA transmission system. The system receives a datastream of symbols to be transmitted to a wireless terminal. The datastream is distributed to a first and second derivative datastream, which are modulated onto a respectivy carrier frequency forming a first and second modulated carrier, respectively. Each modulated carrier is then radiated from a dedicated antenna.

In Orthogonal multi-carrier CDMA system using a concatenated orthogonal /PN spreading scheme, *Electronic Letters*, IEE Stevenage, GB, Vol. 32, No. 25, pp. 2318-2320 (5th December 1996) Won-Sik Youn et al. discloses a communication scheme combining both multi-carrier modulation and direct sequence code division multiple access with a concatenated orthogonal/PN spreading scheme for use in combating the effect of multipath fading channel.

Xu et al. disloses a multicarrier RAKE system in On the performance of multicarrier RAKE systems, Phoenix, Arizona, 3-8 November 1997, New York, IEEE, USA, pp. 295-299 (3rd November 1997). In the system a data sequence is serial-to-parallel converted and multicarrier direct sequence code division multiple access is used on each of the parallel data streams. A receiver of the system provides a RAKE for each carrier, and the outputs of the RAKEs are combined by a maximal-ratio combiner.

The above-discussed multicarrier systems or transmitters are impaired with some or all of the disadvanteges identified above.

The present invention is directed toward overcoming one or more of the above-mentioned problems.

SUMMARY OF THE INVENTION

In CDMA systems, a message to be transmitted is redundantly coded for transmission using a combination of error-correction coding and a spread-spectrum access code. The coded message is modulated to a first radio frequency channel, or band, and also to at least one other frequency channel, which may be either an adjacent or a non-adjacent channel. Other messages for transmission are generated likewise and the signals for transmission on the first channel are summed using a set of weighting factors, with the weighted sum transmitted on the first channel. The same signals are summed for transmission on the at least one other frequency channel, but using weighting factors that have a progressive relative phase rotation compared to their values on the first channel. The sequence of weighting factors used for one signal across the different frequency channels is preferably orthogonal to the sequence of weighting factors used for a different signal. For example, the Fourier sequences described by

$$Wik = \exp(2\pi ik/n)$$

may be used, where "n" is the number of channels utilized for transmission, "i" is the index of the channel, and "k" is the index of the signal being weighted.

In the special case of n equal to a power of two, the weighting factor sequences may instead be Walsh codes. In this case, a decision whether to invert the signal "k" in channel "i" is determined according to the polarity of the i'th bit of the n-bit Walsh code W(k).

When n is composite and equal to the product of factors n1, n2, n3, ..., nm, hybrid Walsh-Fourier sequences may be used for the weighting factor sequences, corresponding to an m-dimensional Walsh-Fourier transform, with the option ofusing the simpler Walsh sequences in dimensions corresponding to a factor of n which is a power of two. Thus, orthogonal sequence sets of any length may be constructed.

When the number of signals to be transmitted is greater than the number of orthogonal functions, i.e., weighting factors, in the set, the signals are divided into a number of groups less than or equal to the number of orthogonal functions in the set. All signals in the same group are then summed for the same frequency channel using the same weighting factors. Different signals within each group may be discriminated by using a set of access or spreading codes that are orthogonal within each frequency channel. Different groups of signals may use, within themselves, the same orthogonal spreading codes, but modified preferably using a Bent sequence for each group that provides maximum differentiation from the codes of other signal groups.

A receiver for receiving and processing the inventive signal construction described above includes multiple receiver channels for receiving signals on the n channels. Multiple channel estimation means estimates, for each channel, the phase and amplitude of each of a number of multiple, delayed propagation paths by which the signal reached the receiver from the transmitter. Each different path taken by the signal is referred to as a ray. To decode a particular signal, the signal received in each channel is first despread using a within-channel spreading code (access code) assigned to that signal to obtain a despread signal, or ray, from each channel for each time-delayed path. Using the channel estimates, the largest of the multiple, delayed propagation paths, *i.e.*, the strongest ray, for each channel is identified.

One despread signal from each channel corresponding to the strongest ray for each channel is then selected and combined by weighting and addition, using weights that are a function of the channel estimate for the respective ray and the weighting factor applied at the transmitter. The receiver weighting factor undoes the difference in phase shifts and attenuation between different channels, and undoes the phase shift of the weighting factor applied in the respective channel prior to transmission. The inventive receiver thus discriminates between signals within each group by means of the within-channel orthogonal codes, and discriminates between signals in different groups by means of the across-channel orthogonal codes.

The second strongest rays of each channel are then selected and combined similarly, and so on until all rays containing significant energy have been used. Each of the combined rays is further combined using a weighting factor for each ray that is a function of the channel estimates to reflect the combined signal-to-interference ratio of each ray. The final combined signal values are then used as soft information for an error-correction decoder to reproduce the originally transmitted information symbols.

In an alternate embodiment, a first signal decoded in the above manner is subtracted from the signal received in each channel, and the residual signals reprocessed to decode a second signal. This process continues iteratively, selecting signals preferably in order of signal strength highest to lowest until all desired signals are decoded.

Other aspects, objects and advantages of the present invention can be obtained from a study of the application, the drawings, and the appended claims.

## BRIEF DESCRIPTION OF THE DRAWINGS

Fig. 1 is a block diagram of a prior art orthogonal CDMA transmitter;
Fig. 2 illustrates a first implementation of the inventive signal converter;
Fig. 3 shows a second implementation of the inventive signal converter;
Fig. 4 illustrates a third implementation of the inventive signal converter using both within-channel and across-channel orthogonal coding;
Fig. 5 illustrates an alternate variation of the third implementation of the inventive signal converter using both within-channel and across-channel orthogonal coding;
Fig. 6 illustrates a further variation of the third implementation of the inventive signal converter using both within-channel and across-channel orthogonal coding;
Fig. 7 is a block diagram of transmitter components for transmitting multi-channel spread-spectrum signals;
Fig. 8 is a block diagram of a receiver for receiving and processing multi-channel spread-spectrum signals; and
Fig. 9 is a block diagram of an additional implementation of a receiver for receiving and processing multi-channel spread-spectrum signals.

## DETAILED DESCRIPTION OF THE INVENTION

In Fig. 1, which has been previously partially described, the spread-spectrum coded signals Ia,Qa; Ib,Qb; ...; In,Qn, with or without the use of orthogonal access codes 22a-n, are combined in a combiner 24. Each spread-spectrum coded signal is illustrated as a pair of signals I,Q which represent the real and imaginary signal waveforms after spread-spectrum coding. The signals Ia,Qa; Ib,Qb; ...; In,Qn may be digital sample sequences or continuous waveforms already filtered by a smoothing filter (not shown). The combiner 24 forms a weighted sum of the I (real) signals and a weighted sum of the Q (imaginary) signals to obtain a composite I,Q signal Itot,Qtot, which is applied to a modulator 26 along with a desired channel frequency signal 28 to produce a modulated signal 30. The modulated signal 30 is amplified to a desired transmit power level using a linear power amplifier 32, and then transmitted via antenna 34. The fraction of the total transmitted power allocated to each signal is controlled by choosing weighting factors for combining in the combiner 24, which factors may be dynamically altered by a power control algorithm in the combiner 24 using information on signal quality fed back from the receivers. In the U.S. CDMA cellular standard known as IS95, one of the signals is preferably a pure spread-spectrum code carrying no information, called the pilot code, and is used by the receivers to estimate the multi-path propagation coefficients that occur during transmission between the transmitter and the receiver. The prior art system of Fig. 1 does not preserve the orthogonality property of orthogonal codes under multi-path propagation.

Several methods of reducing the effects of such interference may be employed. U.S. Patent No. 6,215,762 to Dent, filed July 22,1997 and entitled "Communication System and Method with Orthogonal Block Encoding", describes a method of preserving orthogonality through multi-path channels based on transmitting chips in an interleaved order. U.S. Patent No. 6,359,874 to Dent, filed May 21, 1998 and entitled "Partially Block-Interleaved CDMA Coding and Decoding", further describes how such orthogonal coding could be employed to separate sub-groups of signals from one another, with the separation of signals within each subgroup being achieved by conventional means.

U.S. Patent Application No. 09/247,609 to Dent, filed February 10, 1999 and entitled "Maximum Likelihood Rake Receiver for Use in a Code Division, Multiple Access Wireless Communication System" and U.S. Patent No. 6,507,602 to Dent, filed January 7, 1999 and entitled "Smoothing Receiver Channel Estimates Using Spectral Estimation", describe methods of processing CDMA signals received by multi-path propagation, including the use of channel estimates and methods of estimating the same using pilot symbols and/or demodulated data symbols.

U.S. Patent No. 5,790,549, issued to Dent on August 4, 1998 and entitled "Subtractive Multicarrier CDMA Access Methods and Systems", describes how it can be advantageous to construct a wideband CDMA signal by juxtaposing several narrowband CDMA signals, resulting in reduced receiver complexity. While the signals spread over the multiple narrow bands in the '549 patent were not orthogonal, their interference effects upon each other were subtracted out by decoding the signals sequentially in order strongest to weakest.

The present invention discloses how to generate and receive multi-carrier CDMA signals in which a high proportion of the interference is orthogonal and removed with receivers of reduced complexity. For additional performance gains, the technique of interference subtraction may be used as well.

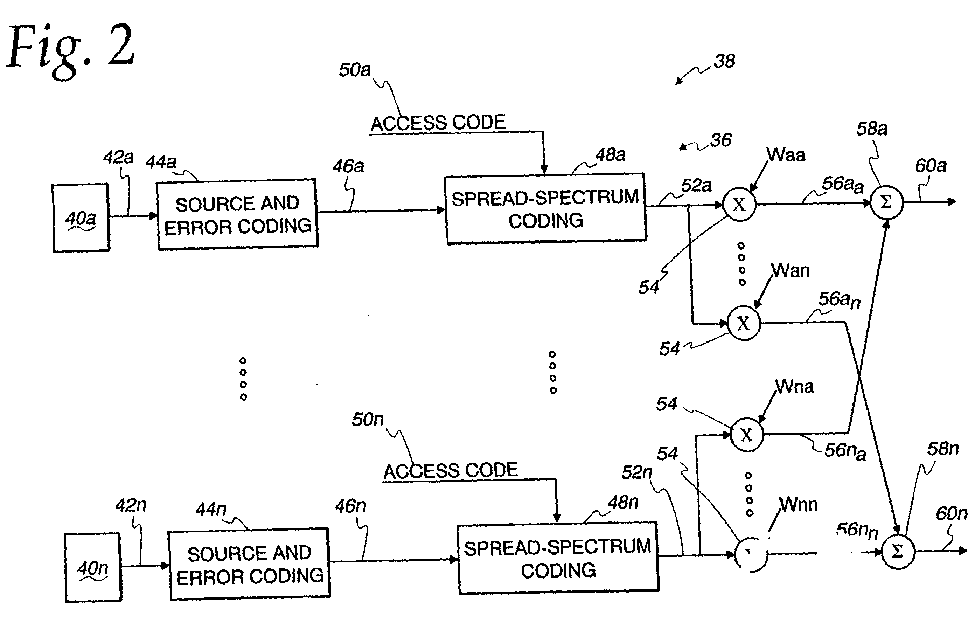

Fig. 2 illustrates signal converter, shown generally at 36, which may be used in a multi-channel orthogonal CDMA transmitter, shown generally at 38. The signal converter 36 includes a plurality of information sources 40a-n generating information signals 42a-n, which are received by respective source and error coding unit 44a-n. The source and error coding units 44a-n suitably source and error code the received information signals 42a-n, producing digitally coded information streams 46a-n. Each digitally coded information stream 46a-n is combined in spread-spectrum coders 48a-n with a respective access code 50a-n that expands the symbol rate of the information stream 46a-n, producing spread-spectrum coded signals 52a-n. While the spread-spectrum coded signals 52a-n are illustrated with a single line, it should be understood that they are complex-valued signals having a real (I) component and an imaginary (Q) component. Each coded information signal 46a-n can use the same access codes, alternatively different non-orthogonal access codes, or different, orthogonal access codes. Each spread-spectrum coded signal index "i" is then multiplicatively weighted with weighting factors Wik by weighting multipliers 54 to produce a signal for each channel "k", where "k" ranges from 1 to the maximum number of channels "n".

For example, the spread-spectrum coded signal 52a is multiplied by weighting factors Waa to Wan by multipliers 54, producing n weighted information signals $56a_{a-n}$. The other spread-spectrum coded signals 52b-n are multiplicatively weighted in the same manner, with each signal developed into n respective weighted information signals. The original information signals 42a-n are then spread across each frequency channel by feeding one ofthe weighted information signals to each of a respective combiner 58a-n associated with each of the n frequency channels. For example, each of the weighted information signals $56a_a$, $56b_a$, ..., $56n_a$, multiplied by weighting factors associated with channel a, are combined by the combiner 58a to produce a combined weighted information signal 60a. This process is repeated until the weighted information signals $56a_n$, $56b_n$, ..., $56n_n$, multiplied by the weighting factors associated with channel n, are combined in the combiner 58n to produce a combined weighted information signal 60n. The combined weighted information signals 60an are then modulated, power amplified, and transmitted.

Fig. 2 illustrates a "'full house" system which has as many different information sources (n) as the number of frequency channels (n) over which each information signal is coded. This is the maximum number of different signals that can be orthogonally coded across "n" channels when their spread-spectrum access codes are otherwise the same.

To ensure orthogonality, the weighting factors Wik must have the orthogonality property such that

$$(W*ik)(Wjk) = 0 \text{ if i is not equal to j,}$$

where summation over the repeated channel index "k" is implied (inner vector product) and "*" means complex conjugate.

Walsh-Hadamard codes are examples ofreal-valued functions that possess the above property, consisting only of values +1 or -1. These can be used when "n" is equal to a power of two. Fourier sequences are examples of complex-valued codes that have the above property, which can be used for any value of "n". For example, the Fourier sequences for "n" = 3 are:

$$\begin{array}{c} k \\ i \\ \hline \begin{array}{ccc} 1 & 1 & 1 \\ 1 & w & w^* \\ 1 & w^* & w \end{array} \end{array}$$

where w is the complex number cos(120°) + j•sin(120°).

In the simplest case of n=2, two-channel orthogonal multicarrier modulation may be constructed using weighting factors (Walsh codes) W11 = 1, W12 = 1, W21 = 1, W22 = -1, which has the effect of placing a first signal equally in two channels while placing the second signal out of phase in the second channel as compared to the first channel.

The orthogonal sequences remain orthogonal if all weighting factors for the same information signal in different channels are scaled by a power control value generated at the receiving source. The power control values are used by the transmitter to either increase or decrease the strength of the transmitted signals, based upon the transmitted signals received by the receiving source being too weak or too strong, respectively. Orthogonality is maintained by increasing and reducing in like amounts in all of the channels. Thus each information signal may be additionally scaled according to the power that the destination receiver requires for good signal decoding. Such techniques are known and need not be described herein. Orthogonality is also maintained if all signals in the same channel have their transmit power raised or lowered alike.

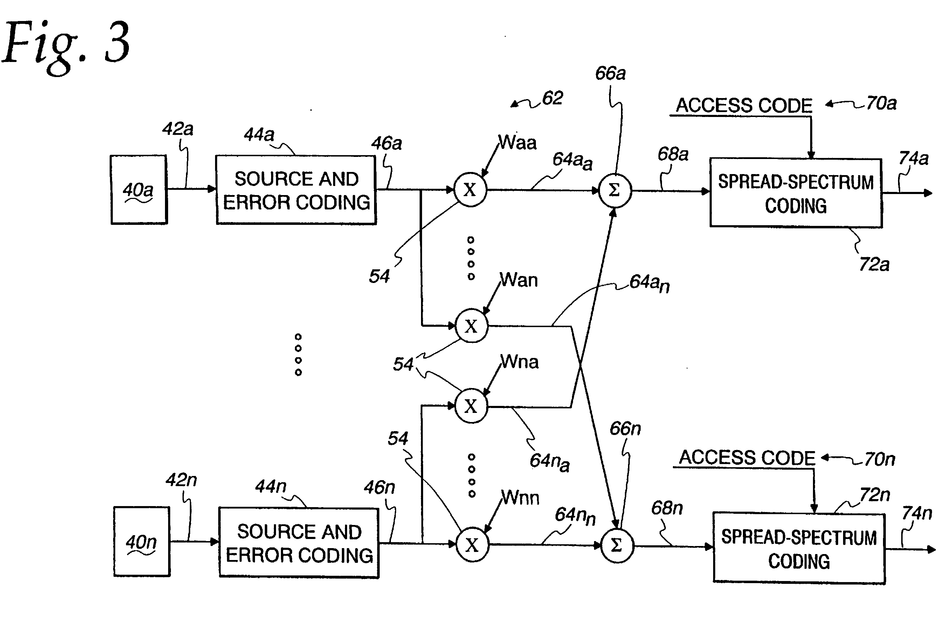

Referring to Fig. 3, a second implementation of the inventive signal converter is shown generally at 62, with like elements of Fig. 2 indicated with the same reference numbers. As shown in Fig. 3, the order of spread-spectrum coding and weighting is interchanged with a set of orthogonal weighting values. If the source and error coders 44a-n produce modulation symbols, such as real BPSK (Binary Phase Shift Keying) symbols or complex QPSK (Quadrature Phase Shift Keying) or OQPSK (OFFSET-QPSK) symbols for example, as a sequence of I,Q symbols, these symbols can be multiplied by the desired real or complex weighting factor Wik prior to spread-spectrum coding. The resulting weighted complex I,Q sequence at the coded information symbol rate may then be further multiplied with the appropriate spread-spectrum access code to expand the chip rate and thus the spectrum. The different spread-spectrum signals corresponding to different information signals for transmission in the same frequency channel may then be added by an adder (not shown), and a common filter (not shown) applied after addition and before I,Q modulation.

It will be appreciated by persons of ordinary skill in the art that the order of multiplication by two factors (weighting factors and access codes) may be interchanged, and the order of application of two linear processes such as linear addition and linear filtering may be interchanged, thus giving rise to many equivalent implementations which all fall within the spirit and scope of the present invention.

In the case where the weighted sum of signals intended to be transmitted on a given channel are to be spread using the same access code, it can be efficient to apply the same access code to the weighted sum. This implementation is shown in Fig. 3. In Fig. 3, the source and error coded signals 46a-n are each split between "n" channel weighting multipliers 54 where they are weighted by a weighting factor Wik, where "i" is the signal index and "k" is the channel index on which the signal is to be transmitted. It should be noted that the coded signals 46a-n, and the signals thereafter, while indicated by a single line are actually complex signals having both a real (I) and imaginary (Q) parts.

For example, the coded signal 46a is multiplied by weighting factors Waa to Wan by multipliers 54, producing n weighted information signals $64a_{a-n}$. The other coded signals 46b-n are multiplicatively weighted in the same manner, with each signal developed into n respective weighted information signals. Weighted information signals for like channels are combined in combiners 66a-n, producing a plurality of combined weighted information signals 68a-n. The combined weighted information signals 68a-n are subjected to respective access codes 70a-n and respective spread-spectrum coders 72a-n. The spread-spectrum combined weighted information signals 74a-n are then modulated, power amplified, and transmitted. The access code is the same for all signals in the same channel, but there is no requirement that the access codes for different channels be the same. This arrangement is efficient because it performs as many operations as possible on low-sample-rate signals first, before expansion through spread-spectrum coding to a higher chip rate.

The arrangements of Figs. 2 and 3 permit transmission of n signals using n channels, but in a way that spreads each signal over all n channels, giving the advantages of frequency diversity while maintaining orthogonality between the n signals.

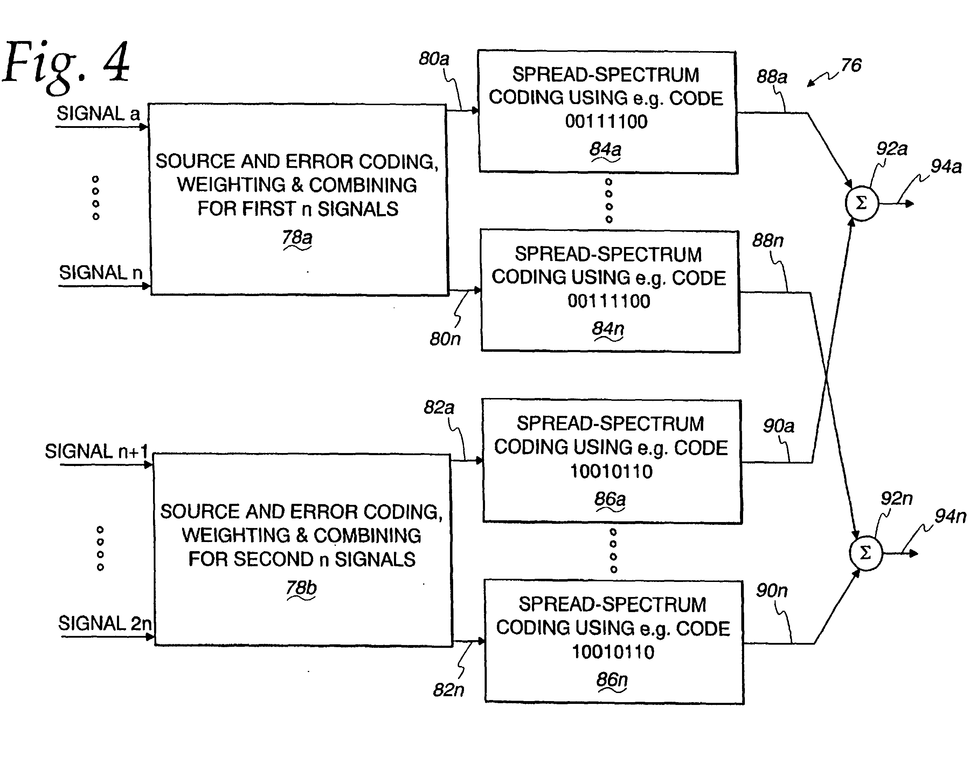

A number of signals greater than n may be transmitted by duplicating Fig. 3 for another n signals that use spread-spectrum access codes orthogonal to those used in the first arrangement. This is illustrated in Fig. 4. which is a block diagram of an alternate embodiment of the inventive signal converter, shown generally at 76.

As shown in Fig. 4, a signal converter 76 includes signal processing blocks 78a and 78b, each receiving a set of n different information signals. Each of the signal processing blocks 78a and 78b includes source and error coding units 44a-n, multipliers 54 and combiners 66a-n as shown and described with respect to Fig. 3. Thus, signal processing block 78a receives information signals a-n and develops a plurality of combined weighted information signals 80a-n, where n corresponds to the number of channels. Similarly, signal processing block 78b receives information signals (n + 1) ... 2n and develops combined weight information signals 82a-n. The combined weighted outputs of signal processing blocks 78a and 78b are still as yet un-spread, and so they are then spread-spectrum coded in spread-spectrum coders 84a-n for signals from block 78a and spread-spectrum coders 86a-n for signals from block 78b, producing respective pluralities of spread-spectrum combined weighted information signals 88a-n and 90a-n.

As shown in Fig. 4, spread-spectrum coders 84a-n use spread-spectrum access codes that are the same for all channels a-n. Similarly, spread-spectrum coders 86a-n use access codes that are the same for all channels a-n, but which are orthogonal to the codes used in spread-spectrum coders 84a-n. Signals 88a and 90a are combined by a combiner 92a producing a further combined signal 94a for transmission in channel a. Similar combining is performed by combiners 92b-n on signals 88b-n and 90b-n producing further combined signals 94b-n for transmission on channels b-n, respectively. Thus, orthogonal waveforms are provided within each channel, even for a pair of signals, one from block 78a and one from block 78b that use the same set of weighting factors. On the other hand, a pair of signals from blocks 78a or 78b that use the same spread-spectrum access code are orthogonal by virtue of using orthogonal weighting factor sets. Thus any two pairs of the 2n signals of Fig. 4 are mutually orthogonal. Other sets of n signals may be processed for transmission across the n channels in similar fashion, up to the maximum number of orthogonal access codes that can be constructed. In the example of a spreading factor equal to 8, using 8-bit access codes, 8 such sets of n information signals can be transmitted using n channels with mutual orthogonality. Using a spreading factor of m, m mutually orthogonal spreading sequences can be found that thus permit mn orthogonal signals to be transmitted using n channels.

The total of mn signals are each transmitted using a combination of spread-spectrum access code and cross-channel weight sequence as illustrated in the table below:

| ASSIGNMENT OF ACCESS CODES AND WEIGHT SEQUENCES | | | | |
|---|---|---|---|---|
| CODE/WEIGHT | WEIGHT SET 1 | WEIGHT SET 2 | ............. | WEIGHT SET n |
| CODE 1 | SIGNAL 11 | SIGNAL 12 | . | SIGNAL 1n |
| CODE 2 | SIGNAL 21 | SIGNAL 22 | . | SIGNAL 2n |
| . | . | . | . | . |
| . | . | . | . | . |
| CODE m | SIGNAL m1 | SIGNAL m2 | . | SIGNAL mn |

For example, referring to Fig. 4 in relation to the table above where m = 2, signals 11, 12, ..., In correspond to signals 88a, 88b, ..., 88n and signals 21, 22, ..., 2n correspond to signals 90a, 90b, ..., 90n, respectively.

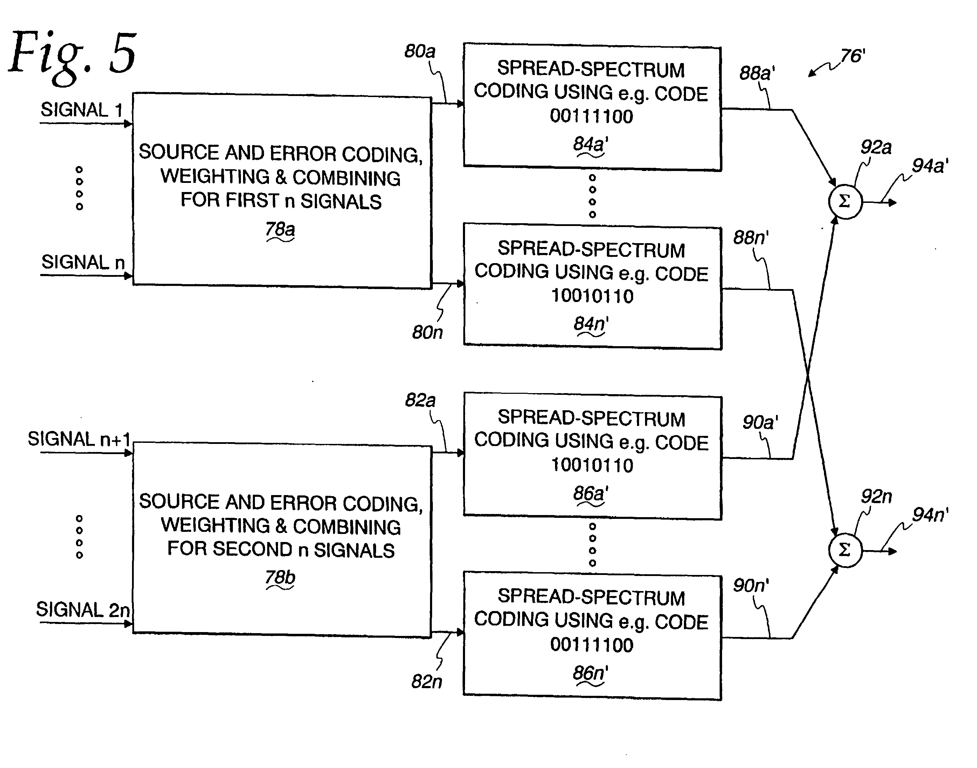

Fig. 5 illustrates an alternate variation of the signal converter shown in Fig. 4, with like elements indicated by the same reference numbers and those elements that have been slightly modified indicated with a prime ('). The signal converter 76' shown in Fig. 5 operates in the same manner as the signal converter 76 described with respect to Fig. 4, using access codes and weighting factor sets jointly to provide orthogonality between mn signals transmitted using n channels. However, as shown in Fig. 5, the access codes used in coders 84a'-n' and 86a'-n' have been permuted. Instead of using the same access code for all channels a-n, spread-spectrum coders 84a'-n' use different access codes for each channel a-n. Similarly, spread-spectrum coders 86a'-n' also use different access codes for each channel a-n. The signals retain mutual orthogonality since the access codes used by spread-spectrum coders for the same channel are orthogonal. For example, the access code used by spread-spectrum coder 84a' is orthogonal to the access code used by spread-spectrum coder 86a'. Similarly, the access code used by spread-spectrum coder 84n' is orthogonal to the access code used by spread-spectrum coder 86n'. While the access codes used by spread-spectrum coder 84a' and 86n' are the same, and the access codes used by spread-spectrum coder 84n' and 86a' are the same, orthogonality is not affected since the access codes are being used on different channels.

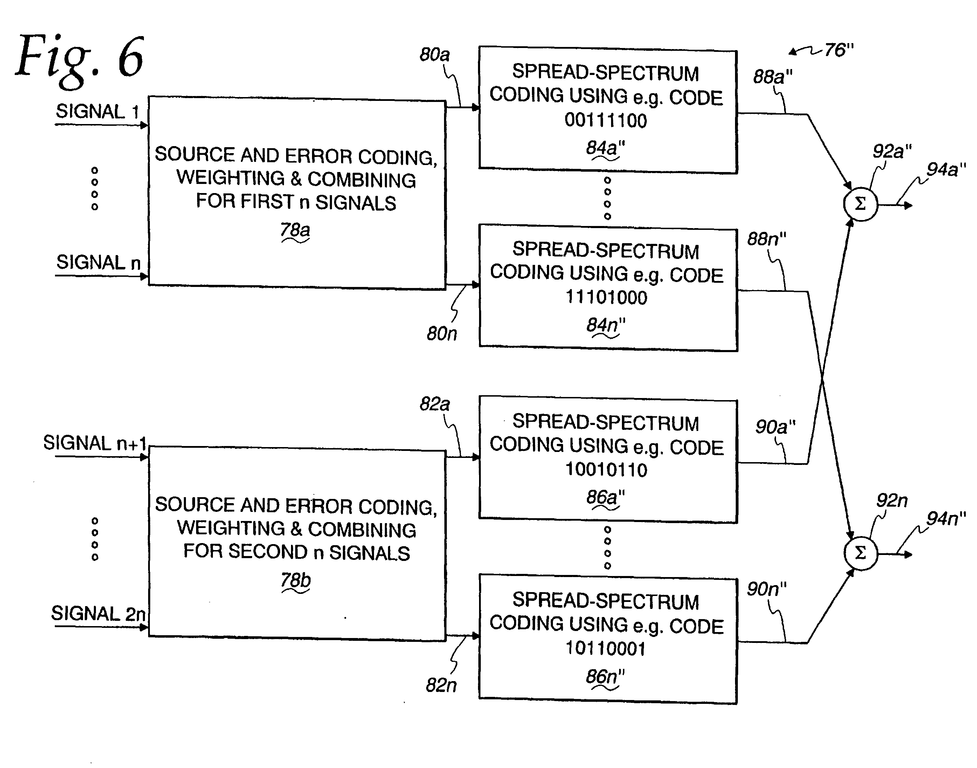

Fig. 6 depicts a further variation of the signal converter 76 shown in Fig. 4 with like elements indicated with the same reference numbers and those elements which have been slightly modified indicated with a double prime ( "). With this variation, it does not matter whether the access codes utilized by each set of spread-spectrum coders 84a"-n" and 86a"-n" even belong to the same orthogonal set, since they are used on different channels and do not interact.

The signal converter 76" shown in Fig. 6 operates in the same manner as the signal converter 76 previously described with respect to Fig. 4, and accordingly, a detailed discussion is not necessary. As shown in Fig. 6, each of the access codes used by spread-spectrum coders 84a"-n" and 86a"-n" are different and are not reused in different channels as in Fig. 5. However, the access codes used by the coders 84a"-n" should preferably form an orthogonal set, and the access codes used by the coders 86a"-n" should also form an orthogonal set, but which may be an orthogonal set differing by a constant from the first orthogonal set. Such different, but still mutually orthogonal sets can be constructed by first starting with a Walsh-Hadamard set, and then bitwise exclusive-ORing any bit pattern to all codes in the set alike. For example, the Bent codes disclosed in U.S. Patent Nos. 5,353,352, issued to Dent and Bottomley on October 4, 1994 and entitled "Multiple Access Coding for Radio Communications" and 5,550,809, issued to Bottomley and Dent on August 27, 1996 and entitled "Multiple Access Coding Using Bent Sequences for Mobile Radio Communications" may be used. In a cellular system employing orthogonal coding, the above patents disclose that a second cellular cell employing the same frequency channel as a first cell can advantageously employ a set of orthogonal codes modified by use of a different Bent sequence as compared to the first cell.

In multi-carrier cellular systems using orthogonal weighting function sets to provide orthogonal cross-channel spreading as disclosed herein, it may also be advantageous if the orthogonal weighting function set used in a second cell differs from that of a first cell, so that no weighting function of one cell is exactly equal to that of another cell. However, when considering the different propagation factors (channel estimates) applied to different channels received from different transmitters, there is most likely little correlation between signals received from different transmitters even without deliberate steps to ensure so.

While the inventive signal converter has been described as including various pluralities of spread-spectrum coders, each of the pluralities of spread-spectrum coders may be replaced with a single spread-spectrum coder performing all of the functions of the pluralities of spread-spectrum coders, without departing from the scope of the present invention.

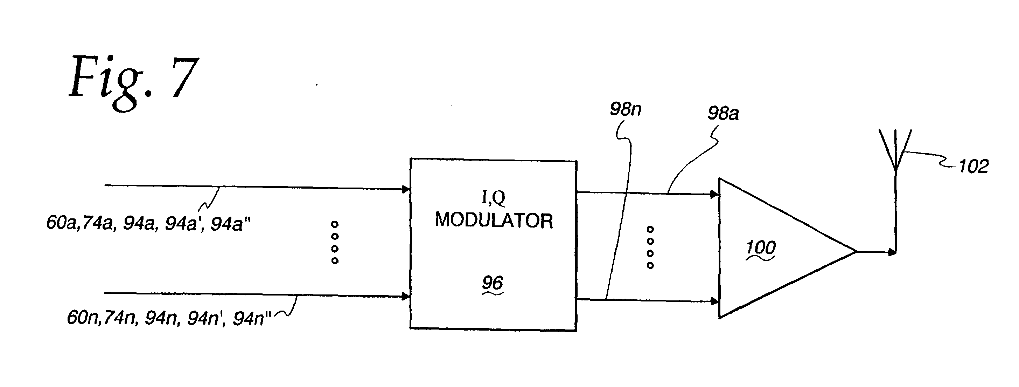

Fig. 7 illustrates one form of transmission of the signals described above, where each of the signals to be transmitted are received by an IQ modulator 96, which develops a plurality of modulated complex signals 98a-n. The modulated signals 98a-n are combined into a power amplifier 100 and transmitted via antenna 102. Alternately, an IQ modulator may be provided for each channel a-n. Further, each of the modulated signals 98a-n may be power amplified independently and then combined for transmission. All of the channels are transmitted at once either by using a single wideband antenna 102 as shown in Fig. 7, or a plurality of narrowband antennas.

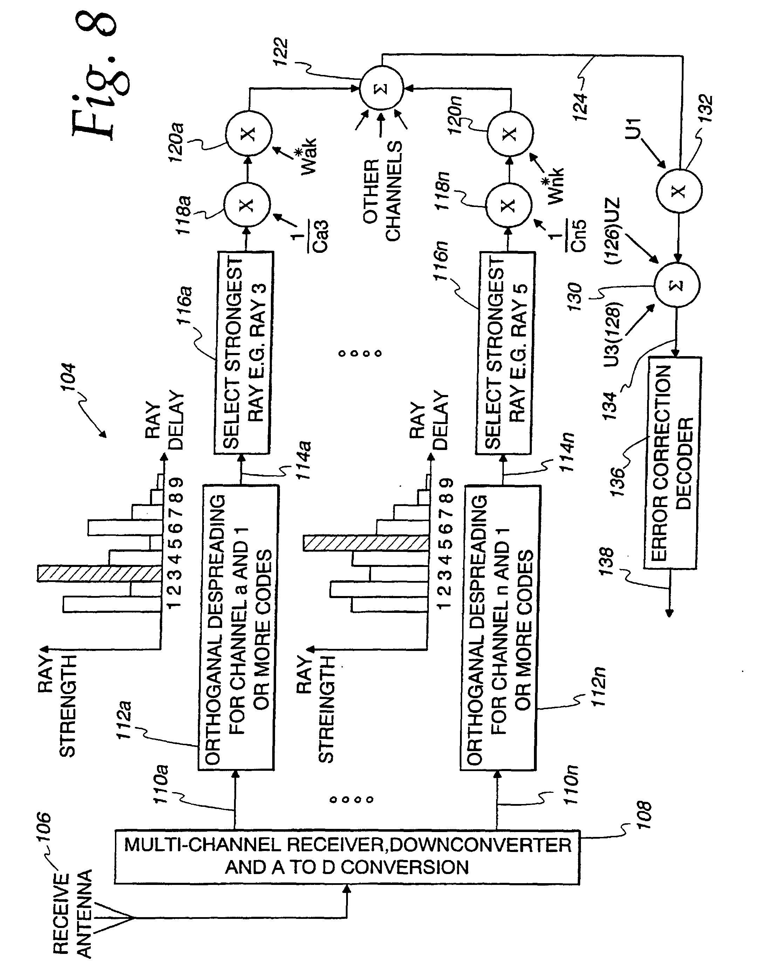

Fig. 8 is a block diagram of a receiver, shown generally at 104, for receiving and processing the inventive multi-channel spread-spectrum signals. The multi-channel signals are received at an antenna 106 and processed in a multi-channel receiver 108 to separate the channels, filter, amplify and downconvert the separated channel signals and convert them from analog to digital form for processing. The digitized output stream of complex-valued samples 110a-n are processed in orthogonal despreaders 112a-n, where different shifts of the sample stream are correlated with one or more mutually orthogonal spreading codes. The despreaders 112a-n can, for example, be so-called matched filters or sliding correlators and may make use of any of the improvements disclosed in U.S. Patent No. 5,931,893 to Dent and Wang, entitled "Efficient Sliding Correlator", U.S. Patent No. 6,330,292 to Dent and Urabe, entitled "Reduced Power Matched Filter", U.S. Patent No. 6,005,887 to Bottomley et al, filed November 14, 1996 and entitled "Despreading of Direct Sequence Spectrum Communication Signals".

If signals using a large number, or all, of the available orthogonal codes are to be despread, a Fast Walsh Transform circuit as described in U.S. Patent No. 5,357,454, issued to Dent on October 18, 1994 and entitled "Fast Walsh Transform Processor" may be utilized for the despreaders 112a-n. The despreader identifies the magnitude and phase of each of the multi-path rays on a symbol-by-symbol basis, with each despreader 112a-n outputting a series of despread different delayed rays 114a-n.

For coherent demodulation, the effect of phase and amplitude changes introduced by the propagation path must be distinguished from the effect of modulation due to the coded information symbols, for which purposes channel estimates may be used. Channel estimates are denoted by $C_{ij}$ for the j'th delayed ray in channel i. In order to remove the effect of the propagation channel, the correlation for a particular symbol and ray can be divided by the channel estimate for that ray. This can be dangerous in fading environments where rays can fade to zero or small values since dividing a faded ray by a small channel estimate enhances the noise. However, ray sorters 116a-n first identify the strongest of all rays from despreaders 112a-n, that is, the least-faded ray is selected in each channel. In Fig. 8, this is the ray with delay 3 for channel a, and the ray with delay 5 for channel n. The largest ray for channel a is then normalized by dividing it by the channel estimate for the largest ray ($C_{a3}$) in multiplier 118a, and likewise the largest rays for the other frequency channels are selected and normalized by respective channel estimates, i.e., channel estimate $C_{n5}$ for channel n where ray 5 is the strongest. The values from multipliers 118a-n will now be proportional to their values as transmitted.

These values are then further weighted by the complex conjugate $W^*_{ik}$ of the set of weights used for the signal in question, using multipliers 120a-n. Using the complex conjugate undoes any phase inversion or phase rotation applied by the cross-channel weighting at the transmitter. All of the despread and weighted rays from all channels a-n should now be phase-aligned and so may be combined in combiner 122 to obtain a symbol value 124 that has been received via the strongest path in each channel. The process is now repeated using the second largest rays of each channel to obtain a symbol value received via the second strongest path 126, the third largest rays of each channel to obtain a symbol value received via the third strongest path 128, and so forth until all rays of significance have been used. Finally, these values 124, 126, 128, ... are combined togther in a combiner 130 after further weighting multiplier 132 for each ray using a weighting factor U1 for the strongest ray values, U2 for the second strongest ray values etc, where U1, U2 ... are preferably proportional to the signal-to-noise ratio, or wanted to unwanted signal ratio, for each of the rays. The final combined value 134 from the combiner 130 is a complex value that contains soft symbol information for one or more coded information bits per symbol, and these soft values are further processed in an error correction decoder 136 using known techniques that can include converting symbol-wise soft information to bit-wise soft information, convolutional decoding using a Viterbi Maximum Likelihood Sequence Estimation algorithm (MLSE), Cyclic Redundancy Checking to detect uncorrected errors, etc. The hard bits 138 output by the error correction decoder 136 represent the originally transmitted information bits.

By the device of normalizing and combining only the strongest rays of each channel together first, and subsequently the second strongest rays, *etc.*, it is contemplated thereby to combine rays only of similar strength and therefore reduce the noise magnification problem alluded to above, when some rays have faded and others have not.

Another way of reducing the noise magnification problem when normalizing faded rays is to employ per signal and per-channel closed-loop power control. Each receiver reports to the transmitter the strength of the signal it receives in each channel. This may be the strength of the strongest ray or alternatively the sum of the power in all rays. The transmitter, via weighting multipliers 54, then increases the power transmitted in a channel to a receiver that is receiving lower than the desired power in the channel, while reducing the power transmitted in a channel to a receiver receiving higher power than the desired power in that channel. Because the fading is expected to be uncorrelated between different receivers and frequency channels, the extra power needed for the disadvantaged receivers is compensated by the reduction of power transmitted to the advantaged receivers. When using this method, however, it is not possible to maintain orthogonal weight sequences unless all signals in a subgroup that are assigned respective ones of the orthogonal sequences are power-controlled by the same factor in the same frequency channel. Since this would produce an undesirable change in the power level of other signals, independent power control in different frequency channels is likely to be more useful in the case of using non-orthogonal weight sequences than in the case of using orthogonal weight sequences. There is thus an argument for reverse power control, to reduce the power transmitted to a receiver in the frequency channels with bad propagation compared to the power transmitted in channels experiencing good propagation. In this manner, power is not wasted attempting to overcome temporary fading.

Due to a delayed ray of a signal no longer being orthogonal to the undelayed rays, or rays of different delay, belonging to another signal, the ray separation achieved by despreaders 112a-n is imperfect. Each despread value for the strongest rays of a given signal contains an error due to the effect of all the other rays (*i.e.*, rays of different delay than the strongest ray) of all the other signals. Using orthogonal codes, however, guarantees that other signal rays of the same delay as the strongest ray of a given signal do not interfere. For receivers, such as those used at a cellular base station, that have to decode all signals, a so called multi-user detector, joint demodulator, or other such technique may be used to reduce the non-orthogonal interference effects between rays of different delay. If the spreading codes are known, this can be achieved by multiplying the set of despread values for all signals and rays by the inverse of a cross-correlation matrix.

There will be little or no correlation of the error quantities for different channels, therefore they do not add constructively when combined in combiner 122 after multiplying by channel weights W*ak, W*bk,...,W*nk. However, neither do the errors due to signals using orthogonal weighting sets cancel, except for the errors due to the same rays of those signals.

From Fig. 8, it is apparent that the successive multiplicative scalings of each ray, for example, using multipliers 118a, 120 and 132 for the strongest ray in channel a, is equivalent to a single multiplication by the composite factor (U1)(W*ak)/Ca3, where U1 is the weighting factor for the strongest ray values, W*ak is the complex conjugate of the weight set for channel a, and Ca3 is the channel estimate for channel a where ray 3 is the strongest.

The factors used above represent a nominal choice which nominally eliminates the orthogonal interference, but does not necessarily reduce non-orthogonal interference. The more general formulation of the problem of a multichannel RAKE receiver is to determine the set of weights g (i, j, k, l) that should be applied to multiply the j'th ray for the i'th channel for the signal using the l'th access code in each channel and the k'th set of cross-channel weights prior to summing the values over the indices i and j to obtain a soft symbol value for the signal with indices (k, l).

Solving the whole problem for all signals at the same time, as is of interest in a cellular base station, requires one type of multi-user or joint demodulator. If the problem is solved for only one signal at a time, however, to yield a matrix of values g(i j) for that signal, requires a simpler receiver which may be of interest for use in a cellular phone that is interested to receive only one signal at a time. In a practical implementation, it may be simpler to estimate the signal-to-(noise + interference) ratio for each ray in each channel based on observation and processing of the received signal, rather than determining a formula based on the number of active signals, the codes in use in each channel, and the power level of each signal, as providing the latter information to a receiver would represent a considerable amount of signaling.

Channel estimates are used in the inventive receiver to rotate the phase of the despread contributions from each frequency channel so that they will add constructively, enhancing the ratio of the decoded desired signal component to interfering components. The channel estimates may also be used to scale the amplitude of the contributions from each frequency channel, so unwanted signals using orthogonal cross-channel weights will be cancelled.

Channel estimates may be obtained by using one of the available orthogonal code/weighting-set combinations to transmit a non-information-bearing signal, *i.e.*, a pure code, called a pilot code in U.S. IS95 systems. Another method is described in U.S. Patent No. 5,377,183, issued to Dent on December 27, 1994 and entitled "Calling Channel in CDMA Communications System", in which a call-alerting signal, which is transmitted at the highest power level so as to reach cell boundaries, may also be used as a pilot code. In one variant of the disclosed method, information bearing or "traffic" signal codes are modulated with the product of the desired information and the information applied to the call alerting channel, so that when using the call alerting channel signal as a coherent reference for decoding the traffic signals, the call-alerting information modulation cancels out.

In another method described in U.S. Patent Application No. 09/247,609 to Dent, filed February 10, 1999 and entitled "Maximum Likelihood Rake Receiver for Use in a Code Division, Multiple Access Wireless Communication System", pilot symbols are transmitted by periodically inserting known symbols in the middle of a stream of traffic symbols, the known symbols being known to the receiver in advance and being used to assist decoding the traffic symbols which are not known to the receiver in advance. The above-mentioned application also discloses how to use the traffic symbols after decoding as additional "known" symbols to enhance channel estimation. This may be done for all possible decodings of traffic symbols to produce candidate sets of channel estimates, each of which is used for decoding the traffic symbol string with which it has been derived. Yet another method of channel estimation, described in U.S. Patent No. 5,305,349, issued to Dent on April 19, 1994 and entitled "Quantized Coherent Rake Receiver", may be used for decoding multibit symbols transmitted using orthogonal or bi-orthogonal codes. After decoding a previous symbol by deciding which of a multiplicity of orthogonal codes was transmitted, the phase and amplitude of the decided code is used to provide a channel estimate for decoding the next symbol.

An advantage of using those of the above-described methods that derive channel estimates separately from each information-carrying signal itself, rather than using a common pilot code or common pilot symbols, is that each signal may then be transmitted using a different antenna beam optimized for the destination receiver. For communication in a direction from spatially distributed subscriber terminals, such as mobile phones, to a central base station, it is essential to derive channel estimates from each signal itself, using either per-signal pilot codes that are transmitted overlapping the information signal code, or else by multiplexing known pilot symbols with the information symbols.

In scaling a signal contribution from a given frequency channel by the inverse of a channel estimate, orthogonal signal codes are suppressed but at the expense of magnifying the noise in channels having relatively low channel estimates. This effect is reduced by combining togther the strongest rays from each channel, then the second strongest rays, and so forth, and then combining the combined rays using further weights. The mathematical expression for this technique is as follows:

Total Combined Result
for a given information symbol

$$= \sum_{j} U_j \left[ \sum_{i} W_i (R_{ij}/C_{ij}) \right]$$

where $U_j = \sum_{i} |C_{ij}|^2$ is the RAKE weight, and $W_i$

is the frequency channel weight for this signal in the i'th channel.

$C_{ij}$ means the complex value of the j'th largest delayed ray for frequency channel 'i' (*i.e.*, channel estimate), and $R_{ij}$ is the corresponding despread value for the j'th ray in the i'th channel for the given information symbol.

If random noise or other-cell interference is dominant over the within-cell interference, a different weighting is required, namely:

Total Combined Result
for a given information symbol

$$= \sum_{j} \left[ \sum_{i} (W_i)(R_{ij})(C^*_{ij}) \right]$$

No RAKE weight $U_j$ is needed in this case as multiplying by $C^*_{ij}$ instead of dividing by $C_{ij}$ provides the correct RAKE weighting.

In both cases, the phase of the weighting factor is the same, that is, it is equal to the inverse of the phase of the channel estimate $C_{ij}$. When a mixture of noise or other-cell interference to in-cell interference exists, it can be postulated that a compromise weighting factor lying between $C^*_{ij}$ and $1/C_{ij}$ is optimum, which compromise weighting factor would have the same phase as both the above, but an amplitude between the two. Such a weighting factor would, for example, be:

$$Q_{ij} = (x/(x+y))C^*_{ij} + (y/(x+y))/C_{ij}$$

where "x" is the out-of-cell interference and "y" is the in-cell interference. In this case the value for the weighting factor $U_j$ would be

$$U_j = \sum_{i} \frac{|C_{ij}|}{|Q_{ij}|}$$

The above weightings agree with the best weightings to use at least for the extremes of all in-cell and all out-of-cell interference, and are therefore expected to behave close to optimally for intermediate cases.

An estimate of the ratios of in-cell to out-of-cell interference may be made by measuring the strength of own-cell transmissions and surrounding cell transmissions, which a mobile phone normally does for the purposes of handoff.

Values of x and y could also be estimated only at call set up and kept fixed for the duration of a call. The estimate may also be made by the serving base station based on me estimated proximity of a mobile phone to the cell boundary, either by position estimating or from the observed signal strength, as for example disclosed in U.S. Patent No. 5,670,964, issued to Dent on September 23,1997 and entitled "Navigation Assistance for Call Handling in Mobile Telephone Systems".

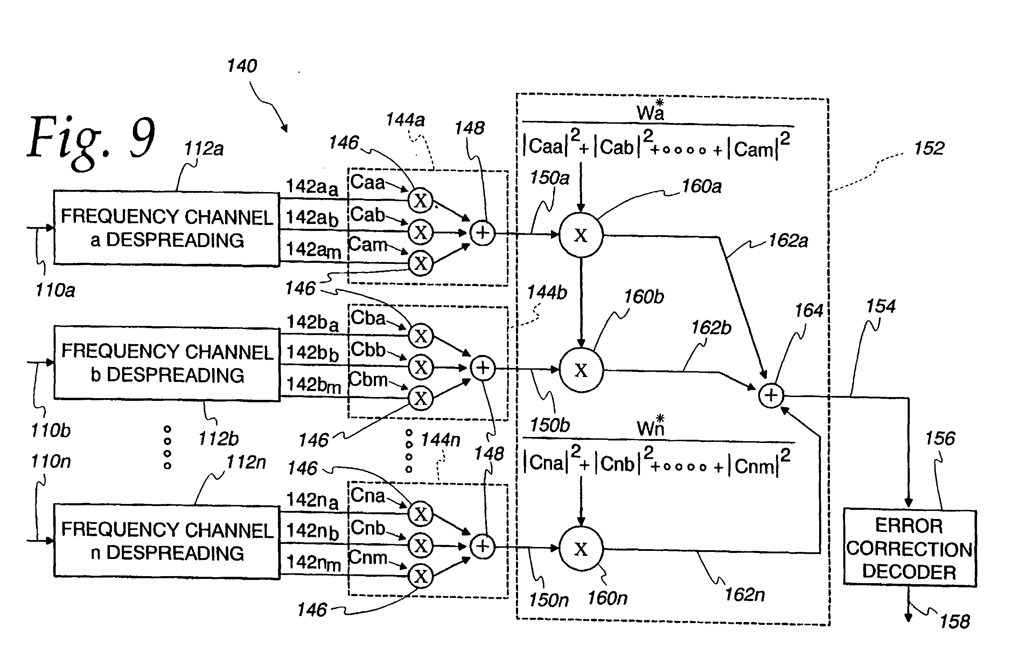

Fig. 9 illustrates an additional implementation of a receiver, shown generally at 140, for receiving and processing the inventive multi-channel spread-spectrum signals. The multi-channel signals are received at the antenna 106 *(see* Fig. 8) and processed in the multichannel receiver 108 *(see* Fig. 8) to separate the channels, filter, amplify and downconvert the separated channel signals and convert them from analog to digital form for processing. The digitized output stream of complex-value samples 110a-n are processed in orthogonal despreaders 112a-n as shown and described with respect to Fig. 8. Each of the despreaders 112a-n identifies the magnitude and phase of each of the multi-path rays on a symbol-by-symbol basis and outputs a series of despread different delayed rays $142a_{a-m}$, $142b_{a-m}$, ..., $142n_{a-m}$, with each series of rays $142a_{a-m}$, $142b_{a-m}$, ..., $142n_{a-m}$ received at respective RAKE receivers 144a, 144b, ..., 144n.

Channel estimates, denoted by Cij for the j'th delayed ray in channel i, are obtained by any means. The RAKE receivers 144a-n multiply each of the multi-path rays for each channel a-n by its respective channel estimate Cij in multipliers 146, combine the multiplied outputs for each channel a-n in combiners 148, and develop one real or complex number per channel, denoted 150a-n, for each coded information symbol period. The RAKE receivers 144a-n may be of conventional type or of improved type as disclosed by any of the references incorporated herein by reference.

Each of the per-channel RAKE combined outputs 150a-n is received by a cross-channel combiner 152 which further weights and combines the RAKE combined outputs 150a-n to develop a final combined value 154 per coded information symbol. The final combined value 154 is a soft value which is further processed in an error correction decoder 156 using known techniques that can include converting symbol-wise soft information to bit-wise soft information, convolutional decoding using a Viterbi Maximum Likelihood Sequence Estimation algorithm, Cyclic Redundancy Checking to detect uncorrected errors, etc. The hard bits 158 output by the error correction decoder 156 represent the originally transmitted information bits.

Operation of the cross-channel combiner 152 is as follows. If the channel estimates were obtained using a pilot code or pilot symbols common to all signals in the channel, the cross-channel weighting factors applied to each individual signal Wa, Wb, ..., Wn for a given signal will not have been removed in the RAKE receivers 144a-n. Therefore, the conjugates of the weighting factors for the desired signal must be applied to the per-channel RAKE combined outputs 150a-n to undo any phase inversion or phase rotation applied by the cross-channel weighting at the transmitter. The RAKE combined outputs 150a-n are thus multiplied by the conjugate of the respective weighting factor W*a, ..., W*n by multipliers 160a-n.

If, on the other hand, the channel estimates were obtained using per-signal pilot symbols that were multiplexed with the signal's data symbols and thereby subjected at the transmitter to the same cross-channel weighting factors, the per-channel RAKE combining by the RAKE receivers 144a-n will remove the cross-channel weighting factors, and the conjugate weighting factors W*a, ..., W*n applied by the cross-channel combiner 152 will be set to unity.

In either of the above cases, in order to effect cancellation of signals having orthogonal cross-channel weights, the per-channel RAKE outputs 150a-n should be scaled to the same amplitude by dividing each by the sum of the squares of the channel estimates, *i. e.*, RAKE weights, for the respective channel. This is shown in the denominator of the values applied to multipliers 160a-n and represents the total per-channel energy. When using this method to preserve orthogonality despite different channel gains, the danger of dividing by zero is reduced by virtue of the low likelihood that the sum of the squares of all rays (channel estimates of the rays) will be zero, as this would imply that all multi-path rays had faded simultaneously.

One skilled in the art will appreciate that when in-cell interference, *i. e.*, interference from other signals transmitted from the same transmitter, is not dominant, scaling other than division by the total per-channel energy may be utilized. For the extreme case of no in-cell interference, no scaling is needed. For the extreme case of total in-cell interference, scaling by division by the total per-channel energy is utilized. For cases where the interference is partly in-cell interference and partly other-cell interference or noise, scalings may be devised falling between no scaling and division by the total per-channel energy.

The further weighted and scaled outputs 162a-n from multipliers 160a-n are added in combiner 164 to produce the final combined value 154, which is processed by the error correction decoder 156, as previously described, to develop the sequence of hard bits 158 representative of the originally transmitted signal.

Another variation in the inventive signal converter consists of using a within-channel spreading technique that provides improved orthogonality between different signals under multi-path conditions. This technique employs interleaving several successive orthogonal codes carrying different information bits, so that all the first code bits are transmitted first, all of the second code bits are transmitted second, and so forth. This is also equivalent to transmitting a block of information bits N times in succession, where N is the within-channel spreading factor, using a different sign or phase rotation for each block-repeat selected from a set of orthogonal codes or phase-sequences. This technique is described in U.S. Patent No. 6,215,762 to Dent.

The inventive signal converter for use in a multi-carrier CDMA system described herein provides spreading of a signal over a wide frequency range, providing frequency diversity, and having advantages over a conventional wideband CDMA technique that would simply use a higher chip-rate spreading code to obtain wider spectral spreading. Spreading can be obtained over a non-contiguous spectrum as the channels used do not have to be adjacent. Accordingly, even where a particular frequency allocation owned by a communications service provider is disjointed, the spread-spectrum techniques described herein may still be employed. Further, the signal processing effort needed for advanced multi-user demodulation algorithms is thereby reduced due to the number of multi-path rays that have to be resolved being lower. This also helps to hold down the level of non-orthogonal interference caused by time-shifted copies of the signal.

While the invention has been described with particular reference the drawings, it should be understood that various modifications could be made without departing from the scope of the present invention, as claimed.

**Claims**

1. A multiple frequency channel transmitter for Code Division Multiple Access (CDMA) signals, said transmitter comprises:

   a plurality of sets of weighting multipliers (Waa...Wan-Wna...Wnn), each set being used to weight a different one of a plurality of error-correction coded information symbols (46a-46n) for transmission using a plurality of frequency channels to transmit each information signal, each set of multipliers using one sequence of weights selected from one of a plurality of sets of orthogonal weight sequences, the multipliers outputting signals (64aa...64an-64na...64nn) corresponding to weighted information symbols;

   a plurality of combiners (66a-66n), each respective one of which is configured to combine the weighted information signals (64aa...64na-64an...64na) that are weighted for the same one of the plurality of frequency channels to produce combined weighted information signals (68a-68n) for each of the plurality of frequency channels; and

   a spread spectrum coder (72a-72n) using a plurality of sets of orthogonal spread spectrum codes (70a-70n), each code in a given set being orthogonal to all the codes in the same set but not orthogonal to all the codes in a different set, the spread spectrum coder combining each combined weighted information symbol (68a-68n) with a selected code from a different selected set to produce a spread spectrum signal, and combining said spread spectrum signals in groups for transmission in the same frequency channel.

2. The transmitter of Claim 1 in which each sequence of weights is a Fourier sequence.

3. The transmitter of Claim 1 in which each set of orthogonal spread spectrum codes is derived from a set of Walsh codes by bitwise modulo-2 addition of a common modifying code to all the codes of the same set, the modifying codes being different for different sets.

4. The transmitter of Claim 3 in which said modifying codes are Bent sequences.

5. The transmitter of Claim 1 wherein each of said spread spectrum signals is chip-interleaved over a defined number of the error-correction coded information symbols so as to reduce the loss of orthogonality resulting from multi-path propagation during transmission.

6. The transmitter of Claim 1 in which said plurality of frequency channels is not a power of two.

7. The transmitter of Claim 1 in which each set of weighting multipliers incorporates into its weighting sequence a power level setting for the associated error-correction coded information symbol.

8. The transmitter of Claim 7 in which said power level settings maintain the power ratio of two signals in any frequency channel to be the same as their relative power ratio in any other frequency channel when the two signals use different weighting sequences from the same set of orthogonal weighting sequences.

9. The transmitter of Claim 1 in which all of said sets of mutually orthogonal weighting sequences are identical sets.

10. The transmitter of Claim 1 in which each set of said sets of mutually orthogonal weighting sequences is derived from the same basic set of mutually orthogonal weighting sequences by combining each sequence of the basic set with a common modifying sequence, the modifying sequence being different for different sets.

11. The transmitter of Claim 1 in which said basic set is a Walsh code set and said modifying sequences are Bent sequences.

12. A multiple frequency channel transmitting method for Code Division Multiple Access (CDMA) signals, said method comprises the steps of:

   weighting a different one of a plurality of error-correction coded information symbols (46a-46n), for transmission using a plurality of frequency channels to transmit each information signal, the weighting using one sequence of weights selected from one of a plurality of sets of orthogonal weight sequences to provide weighted information symbols (64aa...64an-64na...64nn);
   combining the weighted information signals (64aa...64na-64an...64nn) that are weighted for the same one of the plurality of frequency channels to produce combined weighted information signals (68a-68n) for each of the plurality of frequency channels; and
   spread spectrum coding (72a-72n) using a plurality of sets of orthogonal spread spectrum codes (70a-70n), each code in a given set being orthogonal to all the codes in the same set but not orthogonal to all the codes in a different set, by combining each combined weighted information symbol (68a-68n) with a selected code from a different selected set to produce a spread spectrum signal, and combining said spread spectrum signals in groups for transmission in the same frequency channel.

13. The method of Claim 12 in which each sequence of weights is a Fourier sequence.

14. The method of Claim 12 in which each set of orthogonal spread spectrum codes is derived from a set of Walsh codes by bitwise modulo-2 addition of a common modifying code to all the codes of the same set, the modifying codes being different for different sets.

15. The method of Claim 14 in which said modifying codes are Bent sequences.

16. The method of Claim 12 wherein each of said spread spectrum signals is chip-interleaved over a defined number of the error-correction coded information symbols so as to reduce the loss of orthogonality resulting from multipath propagation during transmission.

17. The method of Claim 12 in which said plurality of frequency channels is not a power of two.

18. The method of Claim 12 in which the weighting sequence incorporates a power level setting for the associated error-correction coded information symbol.

19. The method of Claim 18 in which said power level settings maintain the power ratio of two signals in any frequency channel to be the same as their relative power ratio in any other frequency channel when the two signals use different weighting sequences from the same set of orthogonal weighting sequences.

20. The method of Claim 12 in which all of said sets of mutually orthogonal weighting sequences are identical sets.

21. The method of Claim 12 in which each set of said sets of mutually orthogonal weighting sequences is derived from the same basic set of mutually orthogonal weighting sequences by combining each sequence of the basic. set with a common modifying sequence, the modifying sequence being different for different sets.

22. The method of Claim 21 in which said basic set is a Walsh code set and said modifying sequences are Bent sequences.

23. A multi-channel receiver for decoding Code Division Multiple Access (CDMA) signals to reproduce transmitted information symbol streams, said receiver comprises:

   a plurality of receiver channels (108) for receiving spread-spectrum signals in corresponding frequency channels and converting the received signals to representative sample streams (110a-110n);
   a plurality of spread-spectrum despreaders (112a-112n) for combining each frequency-channel representative sample stream with at least one despreading code selected from a plurality of sets of mutually orthogonal despreading codes to produce frequency-channel associated despread signals (114a-114n; $142a_{a-m}$-$142n_{a-m}$);

for each information symbol stream to be decoded, a set of weighting multipliers (118a...118n-120a...120n; 146-160a...160n) for weighting at least one despread signal from each frequency-channel with a weight sequence selected from a plurality of sets of mutually orthogonal weight sequences and a combiner (122; 164) combining each weighted despread signal to produce a soft-symbol stream; and

a decoder (136; 156) that decodes each soft-symbol stream to reproduce said transmitted information symbols.

24. The receiver of Claim 23 in which each of said plurality of sets of mutually orthogonal de spreading codes is formed by combining each code from the same basic set of mutually orthogonal de spreading codes with a common modifying code, the modifying code being varied to produce different code sets.

25. The receiver of Claim 24 in which said basic set is a set of Walsh codes.

26. The receiver of Claim 24 in which said modifying codes are Bent sequences.

27. The receiver of Claim 24 in which a first and second information symbol stream are decoded by despreading the spread spectrum signal from any frequency channel using respective despreading codes selected from different ones of said plurality of sets of mutually orthogonal spread spectrum codes and by weighted combining using respective weight sequences selected from the same set of mutually orthogonal weight sequences.

28. The receiver of Claim 23 in which said sets of mutually orthogonal weight sequences are identical sets.

29. The receiver of Claim 23 in which said sets of mutually orthogonal weight sequences are each derived from a basic set of orthogonal weight sequences by combining each sequence of the basic set with a common modifying sequence, the modifying sequence being varied to produce different sequence sets.

30. The receiver of Claim 29 in which said basic set is a set of Walsh codes.

31. The receiver of Claim 29 in which said modifying sequence is a Bent sequence.

32. The receiver of Claim 23 in which the number of said multiple receiver channels is not a power of two.

33. The receiver of Claim 23 in which said sets of mutually orthogonal weight sequences are Fourier sequences.

34. The receiver of Claim 29 in which a first and a second information symbol stream are decoded by despreading the spread spectrum signal using respective dispreading codes in the same frequency channel selected from the same set of said plurality of sets of mutually orthogonal spread spectrum codes and by weighted combining using respective weight sequences selected from different sets of said plurality of sets of mutually orthogonal weight sequence.

35. The receiver of Claim 23 in which said despreaders despread multiple rays of the signal received in each frequency channel corresponding to multiple, relatively delayed propagation paths to produce multiple despread rays.

36. The receiver of Claim 35 in which despread rays from the same frequency channel are combined by weighting with the complex conjugates of ray-corresponding propagation channel estimates.

37. The receiver of Claim 36 in which said propagation channel estimates are obtained by correlating the received signal with a pilot code in each frequency channel.

38. The receiver of Claim 36 in which each element of the weight sequence used for combining signals from different frequency channels incorporates a scaling by the reciprocal of the sum of the magnitudes squared of said ray-corresponding propagation coefficient estimates in order to preserve orthogonality between signals using different weight sequences from the same orthogonal set.

39. The receiver of Claim 35 in which said multiple despread rays from the same frequency channel are ordered in signal strength, and despread rays of like signal strength ordering are selected to be combined using the selected

**EP 1 195 013 B1**

weight sequence for the symbol stream to be decoded.

**40.** The receiver of Claim 37 in which said selected weight sequence incorporates a scaling using the reciprocal of a propagation channel estimate for the corresponding ray so as to preserve orthogonality between signals using different weight sequences selected from the same mutually orthogonal set of weight sequences.

**41.** The receiver of Claim 39 in which each combination of rays of like signal strength ordering is further combined by weighting with the sum of the squares of the magnitudes of the combined rays.

**42.** The receiver of Claim 37 in which said selected weight sequence incorporates a scaling using the conjugate of a propagation channel estimate for the corresponding ray so as to optimize signal to noise ratio.

**43.** The receiver of Claim 39 in which said selected weight sequence incorporates a scaling using the a complex number lying between the conjugate and the reciprocal of a propagation channel estimate for the corresponding ray so as to maximize the ratio of the desired part of the combined signal to the undesired part including noise and interference due to imperfect orthogonality.

**44.** The receiver of Claim 43 in which the combined signals corresponding to rays of like signal strength ordering from different frequency channels are further combined using weighting factors to further optimize the desired signal to noise plus interference ratio.

**45.** A multiple frequency channel transmitter for Code Division Multiple Access (CDMA) signals, said transmitter comprises:

a spread spectrum coder (48a-48n) using a plurality of sets of orthogonal spread spectrum codes (50a-50n), each code in a given set being orthogonal to all the codes in the same set but not orthogonal to all the codes in a different set, the spread spectrum coder combining a different one of a plurality of error-correction coded information symbols (46a-46n) with a selected code from a different selected set to produce a set of spread spectrum signals (52a-52n);
a plurality of sets of weighting multipliers (Waa...Wan-Wna...Wnn), each set being used to weight a different one of the set of spread spectrum signals (52a-52n) for transmission using a plurality of frequency channels to transmit each spread spectrum signal, each set of multipliers using one sequence of weights selected from one of a plurality of sets of orthogonal weight sequences, the multipliers outputting weighted information signals (56aa...56an-56na...56nn); and
a plurality of combiners (58a-58n), each respective one of which is configured to combine the weighted information signals (56aa..56an-56na...56nn) that are weighted for the same one of the plurality of frequency channels to produce combined weighted information signals (60a-60n) for each of the plurality of frequency channels.

**46.** A multiple frequency channel transmitting method for Code Division Multiple Access (CDMA) signals, said method comprises the steps of:

spread spectrum coding (48a-48n) using a plurality of sets of orthogonal spread spectrum codes (50a-50n), each code in a given set being orthogonal to all the codes in the same set but not orthogonal to all the codes in a different set, by combining a different one of a plurality of error-correction coded information symbols (46a-46n) with a selected code from a different selected one of the sets of orthogonal spread spectrum codes to produce a set of spread spectrum signals (52a-52n);
weighting a different one of the set of spread spectrum signals (52a-52n) for transmission using a plurality of frequency channels to transmit each spread spectrum signal, the weighting using one sequence of weights selected from one of a plurality of sets of orthogonal weight sequences to provide weighted information signals (56aa...56an-56na ... 56nn); and
combining the weighted information signals (56aa...56an-56na...56nn) that are weighted for the same one of the plurality of frequency channels to produce combined weighted information signals (60a-60n) for each of the plurality of frequency channels.

**EP 1 195 013 B1**

**Patentansprüche**

1. Mehrfrequenzkanalsender für Code-Multiplex-Vielfachzugriffssignale bzw. CDMA-Signale, wobei der Sender umfasst:

   eine Vielzahl von Sätzen von Gewichtungsmultiplizierern (Waa...Wan-Wna...Wnn), wobei jeder Satz verwendet wird zum Gewichten eines unterschiedlichen einer Vielzahl von fehlerkorrektur-codierten Informationssymbolen (46a-46n) zum Senden unter Verwendung einer Vielzahl von Frequenzkanälen zum Übertragen jedes Informationssignals, wobei jeder Satz von Multiplizierern eine Folge von Gewichten verwendet, ausgewählt aus einem einer Vielzahl von Sätzen orthogonaler Gewichtsfolgen, wobei die Multiplizierer Signale (64aa...64an-64na...64nn) ausgeben entsprechend gewichteten Informationssymbolen;

   eine Vielzahl von Kombinierern (66a-66n) von denen jeder jeweilige konfiguriert ist zum Kombinieren der gewichteten Informationssignale (64aa...64na-64an...64nn), die gewichtet sind für denselben der Vielzahl von Frequenzkanälen zum Produzieren kombinierter gewichteter Informationssignale (68a-68n) für jeden der Vielzahl von Frequenzkanälen; und

   einen Spreizspektrumcodierer (72a-72n) unter Verwendung einer Vielzahl von Sätzen von orthogonalen Spreizspektrumcodes (70a-70n), wobei jeder Code in einem gegebenen Satz orthogonal zu allen Codes in demselben Satz aber nicht orthogonal zu allen Codes in einem abweichendem Satz ist, der Spreizspektrumcodierer jedes kombinierte gewichtete Informationssymbol (68a-68n) mit einem ausgewählten Code von einem abweichenden ausgewählten Satz kombiniert zum Produzieren eines Spreizspektrumsignals, und das Spreizspektrumsignals in Gruppen zum Übertragen im selben Frequenzkanal kombiniert.

2. Sender nach Anspruch 1, in dem jede Folge von Gewichten eine Fourier-Folge ist.

3. Sender nach Anspruch 1, in dem jeder Satz orthogonaler Spreizspektrumcodes hergeleitet ist von einem Satz von Walsh-Codes durch bit-weite Modulo-2-Addition eines gemeinsamen modifizierenden Codes für alle Codes desselben Satzes, wobei der modifizierende Code sich für unterschiedliche Sätze unterscheidet.

4. Sender nach Anspruch 3, in dem die modifizierten Codes Bent-Folgen sind.

5. Sender nach Anspruch 1, wobei jedes der Spreizspektrumsignale chip-verschachtelt ist über eine definierte Anzahl von fehlerkorrekturcodierten Informationssymbolen, um aus der Multi-Path-Ausbreitung während des Sendens resultierenden Orthogonalitätsverlust zu reduzieren.

6. Sender nach Anspruch 1, in dem die Vielzahl von Frequenzkanälen keine Zweierpotenz ist.

7. Sender nach Anspruch 1, in dem jeder Satz von gewichteten Multiplizierern in seine Gewichtungsfolge eine Leistungspegeleinstellung für das zugeordnete fehlerkorrekturcodierte Informationssymbol einbezieht.

8. Sender nach Anspruch 7, in dem die Leistungspegeleinstellungen das Leistungsverhältnis der beiden Signale in jedem Frequenzkanal beibehalten als gleich ihrem relativen Leistungsverhältnis in irgendeinem anderen Frequenzkanal, wenn die beiden Signale unterschiedliche Gewichtungsfolgen von dem selben Satz orthogonaler Gewichtungsfolgen verwenden.

9. Sender nach Anspruch 1, in dem alle genannten Sätze zueinander orthogonale Gewichtungsfolgen identische Sätze sind.

10. Sender nach Anspruch 1, in dem jeder Satz der Sätze von zueinander orthogonalen Gewichtungsfolgen hergeleitet ist von demselben Basissatz gegenseitig orthogonal gewichteter Folgen durch Kombinieren jeder folge des Basissatzes mit einer gemeinsamen Modifizierungsfolge, wobei die Modifizierungsfolge für unterschiedliche Sätze unterschiedlich ist.

11. Sender nach Anspruch 10, in dem der Basissatz ein Walsh-Code-Satz ist und die Modifizierungsfolgen Bent-Folgen sind.

12. Mehrfrequenzkanalübertragungsverfahren für Code-Multiplex-Vielfachzugriffsignale bzw. CDMA-Signale, wobei

17

das Verfahren die Schritte umfasst:

Gewichten eines unterschiedlichen aus einer Vielzahl von fehlerkorrekturcodierten Informationssymbolen (46a-46n) zum Senden unter Verwendung einer Vielzahl von Frequenzkanälen zum Senden jedes Informationssignals, wobei die Gewichtung eine Folge von Gewichten verwendet, ausgewählt aus einem einer Vielzahl von Sätzen orthogonaler Gewichtungsfolgen zum Bereitstellen gewichteter Informationssymbole (64aa...64an-64na...64nn);

Kombinieren der gewichtet Informationssignale (64aa...64an-64na...64nn), die gewichtet sind für denselben der Vielzahl von Frequenzkanälen zum Produzieren kombinierter gewichteter Informationssignale (68a-68n) für jeden der Vielzahl von Frequenzkanälen;

Spreizspektrumcodierung (72a-72n) unter Verwendung einer Vielzahl von Sätzen orthogonaler Spreizspektrumcodes (70a-70n), wobei jeder Code in einem gegebenen Satz orthogonal zu allen Codes in dem selben Satz ist, aber nicht orthogonal zu allen Codes in einem anderen Satz, durch Kombinieren jedes kombinierten gewichteten Informationssymbols (68a-68n) mit einem ausgewählten Code von einem unterschiedlich ausgewählten Satz zum Produzieren eines Spreizspektrumsignals, und Kombinieren des Spreizspektrumsignals in Gruppen zum Übertragen im selben Frequenzkanal.

13. Verfahren nach Anspruch 12, in dem jede Folge von Gewichten eine Fourier-Folge ist.

14. Verfahren nach Anspruch 12, in dem jeder Satz orthogonaler Spreizspektrumcodes hergeleitet worden ist von einem Satz von Walsh-Codes durch bit-weise Modulo-2-Addition eines gemeinsamen Modifizierungscodes zu all den Codes desselben Satzes, wobei die Modifizierurigscodes sich unterscheiden für unterschiedliche Sätze.

15. Verfahren nach Anspruch 14, in dem die Modifizierungscodes Bent-Folgen sind.

16. Verfahren nach Anspruch 12, wobei jedes der Spreizspektrumsignale chip-verschachtelt ist über eine definierte Zahl von fehlerkorrekturcodierten Informationssymbolen, um den von Multipfadausbreitung während der Übertragung resultierenden Orthogonalitätsverlust zu reduzieren.

17. Verfahren nach Anspruch 12, in dem die Vielzahl von Frequenzkanälen keine Zweierpotenz ist.

18. Verfahren nach Anspruch 12, in dem die gewichtete Folge eine Leistungspegeleinstellung für das zugeordnete fehlerkorrekturcodierte Informationssymbol einbezieht.

19. Verfahren nach Anspruch 18, in dem die Leistungspegeleinstellungen das Leistungsverhältnis der beiden Signale in jedem Frequenzkanal beibehalten als gleich ihrem relativen Leistungsverhältnis in irgendeinem anderen Frequenzkanal, wenn die beiden Signale unterschiedliche Gewichtungsfolgen von dem selben Satz orthogonaler Gewichtungsfolgen verwenden.

20. Verfahren nach Anspruch 12, in dem alle genannten Sätze zueinander orthogonaler Gewichtungsfolgen identische Sätze sind.

21. Verfahren nach Anspruch 12, in dem jeder Satz der Sätze von gegenseitig orthogonaler Gewichtungsfolgen hergeleitet ist von demselben Basissatz gegenseitig orthogonal gewichteter Folgen durch Kombinieren jeder Folge des Basissatzes mit einer gemeinsamen Modifizierungsfolge, wobei die Modifizierungsfolge für unterschiedliche Sätze unterschiedlich ist.

22. Verfahren nach Anspruch 21, in dem der Basissatz ein Walsh-Code-Satz ist und die Modifizierungsfolgen Bent-Folgen sind.

23. Mehrkanalempfänger zum Decodieren von Codemultiplex-Vielfachzugriff-Signalen bzw. CDMA-Signalen zum Reproduzieren übertragener Informationssymbolsströme, wobei der Empfänger umfasst:

eine Vielzahl von Empfängerkanälen ((108) zum Empfangen von Spreizspektrumsignalen in entsprechenden Frequenzkanälen und Umsetzen der empfangenen Signale in repräsentative Abtastströme (110a-110n);

eine Vielzahl von Spreizspektrumentspreizern (112a-112n) zum Kombinieren jedes frequenzkanalrepräsentativen Abtaststroms mit mindestens einem Entspreizungscode, ausgewählt aus einer Vielzahl von Sätzen von zueinander orthogonalen Entspreizungscodes zum Produzieren von frequenzkanalzugeordneten Entspreizungssignalen (114a-114n; $142a_{a-m}$-$142n_{a-m}$);

für jeden zu decodierenden Informationssymbolstrom, einen Satz von gewichteten Multiplizierern (118a... 118n-120a...120n; 146-160a...160n) zum Gewichten mindestens eines Entspreizungssignals von jedem Frequenzkanal mit einer Gewichtsfolge, ausgewählt aus einer Vielzahl von Sätzen von zueinander orthogonalen Gewichtsfolgen, und einen Kombinierer (122; 164), der jedes gewichtete entspreizte Signal kombiniert zum Produzieren eines Weich-Symbolstroms bzw. Soft-Symbolstroms; und

einen Decoder (136;156), der jeden Soft-Symbolstrom decodiert zum Reproduzieren der übertragenen Informationssymbole.

24. Empfänger nach Anspruch 23, in dem jeder der Vielzahl von Sätzen von zueinander orthogonalen Entspreizungscodes ausgebildet wird durch Kombinieren jedes Codes von dem selben Basissatz von zueinander orthogonalen Entspreizungscodes mit einem gemeinsamen Modifizierungscode, wobei der Modifizierungscode variiert wird zum Produzieren von unterschiedlichen Codesätzen.

25. Empfänger nach Anspruch 24, in dem der Basissatz ein Satz von Walsh-Codes ist.

26. Empfänger nach Anspruch 24, in dem die Modifizierungscodes Bent-Folgen sind.

27. Empfänger nach Anspruch 24, in dem ein erster und zweiter Informationssymbolstrom decodiert werden durch Entspreizen des Spreizspektrumssignals von irgendeinem Frequenzkanal unter Verwendung jeweiliger Entspreizungscodes, ausgewählt aus unterschiedlichen von der Vielzahl von Sätzen von zueinander orthogonalen Spreizspektrumcodes, und durch gewichtetes Kombinieren unter Verwendung jeweiliger Gewichtungsfolgen, ausgewählt aus demselben Satz von zueinander orthogonalen Gewichtungsfolgen.

28. Empfänger nach Anspruch 23, in dem die Sätze zueinander orthogonaler Gewichtungsfolgen identische Sätze sind.

29. Empfänger nach Anspruch 23, in dem Sätze zueinander orthogonaler Gewichtungsfolgen hergeleitet sind von einem Basissatz orthogonaler Gewichtungsfolgen durch Kombinieren jeder Folge des Basissatzes mit einer gemeinsamen Modifizierüngsfolge, wobei die Modifizierungsfolge variiert wird zum Produzieren unterschiedlicher Folgensätze.

30. Empfänger nach Anspruch 29, in dem der Basissatz ein Satz von Walsh-Codes ist.

31. Empfänger nach Anspruch 29, in dem die Modifizierungsfolge eine Bent-Folge ist.

32. Empfänger nach Anspruch 23, in dem die Anzahl der Vielzahl von Empfängerkanälen nicht eine Zweierpotenz ist.

33. Empfänger nach Anspruch 23, in dem Sätze zueinander orthogonaler Gewichtungsfolgen Fourier-Folgen sind.

34. Empfänger nach Anspruch 29, in dem ein erster und ein zweiter Informationssymbolstrom decodiert werden durch Entspreizen des Spreizspektrumssignals unter Verwendung jeweiliger Entspreizungscodes in demselben Frequenzkanal, ausgewählt aus demselben Satz von der Vielzahl von Sätzen von zueinander orthogonalen Spreizspektrumcodes und durch gewichtetes Kombinieren unter Verwendung jeweiliger Gewichtungsfolgen, ausgewählt von unterschiedlichen Sätzen der Vielzahl von Sätzen von zueinander orthogonalen Gewichtungsfolgen.

35. Empfänger nach Anspruch 23, in dem der Entspreizer mehrere Strahlen des in jedem Frequenzkanal empfangenen Signals entspreizt entsprechend mehreren relative verzögerten Ausbreitungspfaden zum Produzieren mehrerer Entspreizungsstrahlen.

36. Empfänger nach Anspruch 35, in dem Entspreizungsstrahlen von demselben Frequenzkanal kombiniert werden durch Gewichten mit den Konjugierkomplexen der strahlentsprechenden Ausbreitungskänalschätzungen.

**37.** Empfänger nach Anspruch 36, in dem die Ausbreitungskanalschätzungen erhalten werden durch Korrelieren des empfangenen Signals mit einem Pilotcode in jedem Frequenzkanal.

**38.** Empfänger nach Anspruch 36, in dem jedes Element der Gewichtsfolge, die verwendet wird zum Kombinieren von Signalen von unterschiedlichen Frequenzkanälen, eine Skalierung einbezieht durch den Kehrwert der Summe der quadrierten Magnituden der strahlentsprechenden Ausbreitungskoeffizientenschätzungen, um Orthogonalität zwischen Signalen unter Verwendung unterschiedlicher Gewichtsfolgen vom selben orthogonalen Satz zu bewahren.

**39.** Empfänger nach Anspruch 35, in dem die mehreren entspreizten Strahlen von demselben Frequenzkanal nach der Signalstärke geordnet werden und entspreizte Strahlen in ähnlicher Signalstärkenordung ausgewählt werden, um kombiniert zu werden unter Verwendung der ausgewählten Gewichtsfolge für den zu decodierenden Symbolstrom.

**40.** Empfänger nach Anspruch 37, in dem die ausgewählte Gewichtsfolge eine Skalierung unter Verwendung des Kehrwertes einer Ausbreitungskanalschätzung für den entsprechenden Strahl auswählt, um Orthogonalität zwischen Signalen unter Verwendung unterschiedlicher Gewichtsfolgen, ausgewählt aus demselben orthogonalen Satz von Gewichtsfolgen, zu bewahren.

**41.** Empfänger nach Anspruch 39, in dem jede Kombination von Strahlen von ähnlicher Signalstärkeordnung ferner kombiniert wird durch Gewichten der Summe der Quadrate der Magnituden der kombinierten Strahlen.

**42.** Empfänger nach Anspruch 37, in dem die ausgewählte Gewichtsfolge eine Skalierung einbezieht unter Verwendung des Konjugates einer Ausbreitungskanalschätzung für den entsprechenden Strahl, um das Signal-zu-Rausch-Verhältnis zu optimieren.

**43.** Empfänger nach Anspruch 39, in dem die ausgewählte Gewichtsfolge eine Skalierung einbezieht unter Verwendung einer komplexen Zahl, die zwischen dem Konjugat und dem Kehrwert einer Ausbreitungskanalschätzung für einen entsprechenden Strahl liegt, um das Verhältnis des gewünschten Teils des kombinierten Signals zum unerwünschten Teil einschließlich Rauschen und zum durch nicht perfekte Orthogonalität bewirkter Interferenz zu maximieren.

**44.** Empfänger nach Anspruch 43, in dem die kombinierten Signale entsprechend Strahlen von gleicher Signalstärkenordnung von unterschiedlichen Frequenzkanälen ferner kombiniert werden unter Verwendung von Gewichtsfaktoren zum ferneren Optimieren des Verhältnisses des gewünschten Signals zu Rauschen plus Interferenz.

**45.** Mehrfrequenzkanalsender für Codemultiplex-Vielfachzugriffssignale bzw. CDMA-Signale, wobei der Sender umfasst:

einen Spreizspektrumcodierer (48a-48n) unter Verwendung einer Vielzahl von Sätzen orthogonaler Spreizspektrumcodes (50a-50n), wobei jeder Code in einem gegebenen Satz orthogonal zu allen Codes in demselben Satz ist, aber nicht orthogonal zu allen Codes in einem anderen Satz, wobei der Spreizspektrumcodierer ein unterschiedliches aus einer Vielzahl von fehlerkorrekturcodierten Informationssymbolen (46a-46n) kombiniert mit einem ausgewählten Code von einem unterschiedlichen ausgewählten Satz zum Produzieren eines Satzes von Spreizspektrumsignalen (52a-52n);

eine Vielzahl von Sätzen von gewichtenden Multiplizierern (Waa...Wan-Wna...Wnn), wobei jeder Satz verwendet wird zum Gewichten eines unterschiedlichen aus dem Satz von Spreizspektrumsignalen (52a-52n) zum Senden unter Verwendung einer Vielzahl von Frequenzkanälen zum Senden jedes Spreizspektrumsignals, wobei jeder Satz von Multiplizierern eine Folge von Gewichten ausgewählt aus einem einer Vielzahl von Sätzen von orthogonalen Gewichtungsfolgen verwendet und wobei die Multiplizierer gewichtete Informationssignale (56aa...56an-56na...56nn) ausgeben; und

eine Vielzahl von Kombinierern (58a-58n), jeder jeweilige von welchen konfiguriert ist zum Kombinieren der gewichteten Informationssignale (56aa...56an-56na...56nn), die gewichtet sind für denselben der Vielzahl von Frequenzkanälen zum Reduzieren kombinierter gewichteter Informationssignale (60a-60n) für jeden der Vielzahl von Frequenzkanälen.

**46.** Mehrfrequenzkanalsendeverfahren für Codemultiplex-Vielfachzugriff-Signale bzw. (CDMA-Signale), wobei das Verfahren die Schritte umfasst:

Spreizspektrumcodierung (48a-48n) unter Verwendung einer Vielzahl von Sätzen von Orthogonalspreizspektrumcodes (50a-50n), wobei jeder Code in einem gegebenen Satz orthogonal zu allen Codes in demselben Satz ist aber nicht orthogonal zu allen Codes in einem unterschiedlichen Satz, durch Kombinieren eines unterschiedlichen aus einer Vielzahl von fehlerkorrekturcodierten Informationssymbolen (46a-46n) mit einem ausgewählten Code von einem unterschiedlichen Ausgewählten der Sätze von orthogonalen Spreizspektrumcodes zum Produzieren eines Satzes von Spreizspektrumsignalen (52a-52n);

Gewichten eines unterschiedlichen der Sätze von Spreizspektrumsignalen (52a-52n) zum Senden unter Verwendung einer Vielzahl von Frequenzkanälen zum Senden jedes Spreizspektrumsignals, wobei das Gewichten eine Folge von Gewichten ausgewählt aus einem einer Vielzahl von Sätzen von Orthogonalgewichtsfolgen verwendet zum Bereitstellen gewichteter Informationssignale (56aa...56an-56na...56nn); und

Kombinieren der gewichteten Informationssignale (56aa...56an-56na...56nn), die gewichtet sind für denselben der Vielzahl von Frequenzkanälen zum Produzieren kombinierter gewichteter Informationssignale (60a-60n) für jeden der Vielzahl von Frequenzkanälen.

## Revendications

**1.** Émetteur à canaux de fréquences multiples pour signaux à Accès Multiples par Répartition de Codes (CDMA), ledit émetteur comprenant :

une pluralité d'ensembles de multiplieurs de pondération (Waa... Wan-Wna... Wnn), chaque ensemble étant utilisé pour pondérer l'un différent d'une pluralité de symboles d'information codés avec correction d'erreur (46a à 46n) en vue d'une transmission utilisant une pluralité de canaux de fréquence pour transmettre chaque signal d'information, chaque ensemble de multiplieurs utilisant une séquence de poids sélectionnée à partir de l'un d'une pluralité d'ensembles de séquences de poids orthogonales, les multiplieurs délivrant en sortie des signaux (64aa... 64an-64na... 64nn) correspondants à des symboles d'information pondérés ;
une pluralité de combineurs (66a à 66n), chacun d'eux étant configuré pour combiner les signaux d'information pondérés (64aa... 64na-64an... 64na) qui sont pondérés pour le même un d'une pluralité de canaux de fréquence pour produire des signaux d'information pondérés combinés (68a à 68n) pour chacun de la pluralité de canaux de fréquence ; et
un codeur à étalement de spectre (72a à 72n) utilisant une pluralité d'ensembles de codes à étalement de spectre orthogonaux (70a à 70n), chaque code dans un ensemble donné étant orthogonal à tous les codes dans le même ensemble mais pas orthogonal à tous les codes d'un ensemble différent, le codeur à étalement de spectre combinant chaque symbole d'information pondéré combiné (68a à 68n) avec un code choisi à partir d'un ensemble choisi différent pour produire un signal à étalement de spectre, et combinant lesdits signaux à étalement de spectre en groupes en vue d'une transmission sur le même canal de fréquence.

**2.** Émetteur selon la revendication 1, dans lequel chaque séquence de poids est une séquence de Fourier.

**3.** Émetteur selon la revendication 1, dans lequel chaque ensemble de codes à étalement de spectre orthogonaux est dérivé d'un ensemble de codes Walsh par addition bit à bit modulo 2 d'un code modifiant commun à tous les codes du même ensemble, les codes modifiant étant différents pour les différents ensembles.

**4.** Émetteur selon la revendication 3, dans lequel ledits codes modifiant sont des séquences de Bent.

**5.** Émetteur selon revendication 1, dans lequel chacun desdits signaux à étalement de spectre est intercalé par bribe sur un nombre défini de symboles d'information codés avec correction d'erreur de manière à réduire la perte d'orthogonalité résultant de la propagation par chemins multiples durant la transmission.

**6.** Émetteur selon la revendication 1 dans lequel ladite pluralité de canaux de fréquence n'est pas une puissance de deux.

**7.** Émetteur selon la revendication 1, dans lequel chaque ensemble de multiplieurs de pondération incorpore dans sa séquence de pondération un réglage de niveau de puissance pour le symbole d'information codé avec correction d'erreur associé.

8. Émetteur selon la revendication 7, dans lequel lesdits réglages de niveau de puissance maintiennent le rapport de puissance de deux signaux dans l'un quelconque des canaux de fréquence au même niveau que leur rapport de puissance relatif dans n'importe quel autre canal de fréquence quand les deux signaux utilisent des séquences de pondération différentes provenant du même ensemble de séquences de pondération orthogonales.

9. Émetteur selon la revendication 1 dans lequel tous lesdits ensembles de séquences de pondération mutuellement orthogonales sont des ensembles identiques.

10. Émetteur selon la revendication 1, dans lequel chaque ensemble desdits ensembles de séquences de pondération mutuellement orthogonales est dérivé à partir du même ensemble de base de séquences de pondération mutuellement orthogonales en combinant chaque séquence de l'ensemble de base avec une séquence modifiante commune, la séquence modifiante étant différente pour les différents ensembles.

11. Émetteur selon la revendication 10, dans lequel ledit ensemble de base est un ensemble de codes Walsh et lesdites séquences modifiantes sont des séquences de Bent.

12. Procédé de transmission à canaux de fréquences multiples pour des signaux à Accès Multiples par Répartition de Codes (CDMA), ledit procédé comprenant les étapes suivantes :

la pondération de l'un différent d'une pluralité de symboles d'information codés avec correction d'erreur (46a à 46n), en vue d'une transmission utilisant une pluralité de canaux de fréquence pour transmettre chaque signal d'information, la pondération utilisant une séquence de poids choisie à partir de l'un d'une pluralité d'ensembles de séquences de poids orthogonales pour fournir des symboles d'information pondérés (64aa... 64an-64na... 64nn) ;
la combinaison des signaux d'information pondérés (64aa... 64na-64an... 64nn) qui sont pondérés pour le même canal de fréquence d'une pluralité de canaux de fréquence pour produire des signaux d'information pondérés combinés (68a à 68n) pour chacun de la pluralité des canaux de fréquence ; et
le codage à étalement de spectre (72a à 72n) utilisant une pluralité d'ensembles de codes à étalement de spectre orthogonaux (70a à 70n), chaque code dans un ensemble donné étant orthogonal à tous les codes dans le même ensemble mais non orthogonal à tous les codes dans un ensemble différent, en combinant chaque symbole d'information pondéré combiné (68a à 68n) avec un code choisi provenant d'un ensemble choisi différent pour produire un signal à étalement de spectre, et en combinant lesdits signaux à étalement de spectre en groupes en vue d'une transmission sur le même canal de fréquence.

13. Procédé selon la revendication 12, dans lequel chaque séquence de poids est une séquence de Fourier.

14. Procédé selon la revendication 12, dans lequel chaque ensemble de codes à étalement de spectre orthogonaux est dérivé d'un ensemble de codes Walsh par addition bit à bit modulo 2 d'un code modifiant commun à tous les codes du même ensemble, les codes modifiant étant différents pour des ensembles différents.

15. Procédé selon la revendication 14, dans lequel lesdits codes modifiants sont des séquences de Bent.

16. Procédé selon la revendication 12 dans lequel chacun desdits signaux à étalement de spectre est intercalé par bribe sur un nombre défini de symboles d'information codé avec correction d'erreur de manière à réduire la perte d'orthogonalité résultant de la propagation par chemins multiples durant la transmission.

17. Procédé selon la revendication 12, dans lequel ladite pluralité de canaux de fréquence n'est pas une puissance de deux.

18. Procédé selon la revendication 12, dans lequel la séquence de pondération incorpore un réglage de niveau de puissance pour le symbole d'information codé avec correction d'erreur associé.

19. Procédé selon la revendication 18, dans lequel lesdits réglages de niveau de puissance maintiennent le rapport de puissance de deux signaux dans l'un quelconque des canaux de fréquence au même niveau que leur rapport de puissance relatif dans n'importe quel autre canal de fréquence quand les deux signaux utilisent des séquences de pondération différentes provenant du même ensemble des séquences de pondération orthogonales.

20. Procédé selon la revendication 12, dans lequel tous desdits ensembles de séquences de pondération mutuellement orthogonales sont des ensembles identiques.

21. Procédé selon la revendication 12, dans lequel chaque ensemble desdits ensembles de séquences de pondération mutuellement orthogonales est dérivé à partir du même ensemble de base de séquences de pondération mutuellement orthogonales en combinant chaque séquence de l'ensemble de base avec une séquence modifiante commune, la séquence modifiante étant différente pour des ensembles différents.

22. Procédé selon la revendication 21, dans lequel ledit ensemble de base est un ensemble de codes de Walsh et lesdites séquences modifiantes sont des séquences de Bent.

23. Récepteur à canaux multiples pour décoder des signaux à Accès Multiples par Répartition de Codes (CDMA) pour reproduire des flots de symboles d'information transmis, ledit récepteur comprenant :

   une pluralité de canaux de récepteur (108) pour recevoir des signaux à étalement de spectre dans des canaux de fréquences correspondants et convertir les signaux reçus en flots d'échantillons représentatifs (110a à 110n);
   une pluralité de désétaleurs de spectre étalé (112a à 112n) pour combiner chaque flot d'échantillons représentatifs du canal de fréquence avec au moins un code de désétalement choisi à partir d'une pluralité d'ensembles de codes de désétalement mutuellement orthogonaux pour produire des signaux désétalés associés au canal de fréquence (114a à 114n ; $142a_{a-m}$ à $142n_{a-m}$) ;
   pour chaque flot de symboles d'information à décoder, un ensemble de multiplieurs de pondération (118a... 118n à 120a... 120n ; 146 à 160a... 160n) pour pondérer au moins un signal désétalé à partir de chaque canal de fréquence avec une séquence de poids choisie à partir d'une pluralité d'ensembles de séquences de poids mutuellement orthogonales et un combineur (122 ; 164) combinant chaque signal désétalé pondéré pour produire un flot de symboles épuré ; et
   un décodeur (136 ; 156) qui décode chaque flot de symboles épuré pour reproduire lesdits symboles d'information transmis.

24. Récepteur selon la revendication 23, dans lequel chacun de ladite pluralité d'ensembles de codes de désétalement mutuellement orthogonaux est formé en combinant chaque code provenant du même ensemble de base de codes de désétalement mutuellement orthogonaux avec un code modifiant commun, le code modifiant variant pour produire différents ensembles de codes.

25. Récepteur selon la revendication 24, dans lequel ledit ensemble de base est un ensemble de codes de Walsh.

26. Récepteur selon la revendication 24, dans lequel lesdits codes modifiants sont des séquences de Bent.

27. Récepteur selon la revendication 24 dans lequel un premier et un second flot de symboles d'information sont décodés en désétalant le signal à étalement de spectre pour n'importe quel canal de fréquence utilisant les codes de désétalement respectifs choisis à partir d'items différents de ladite pluralité d'ensembles de codes à étalement de spectre mutuellement orthogonaux et en réalisant une combinaison pondérée en utilisant les séquences de poids respectives choisies à partir du même ensemble de séquences de poids mutuellement orthogonales.

28. Récepteur selon la revendication 23, dans lequel lesdits ensembles de séquences de poids mutuellement orthogonales sont des ensembles identiques.

29. Récepteur selon la revendication 23, dans lequel lesdits ensembles de séquences de poids mutuellement orthogonales sont chacun dérivés à partir d'un ensemble de base de séquences de poids orthogonales en combinant chaque séquence de l'ensemble de base avec une séquence modifiante commune, la séquence modifiante variant pour produire différents ensembles de séquences.

30. Récepteur selon la revendication 29, dans lequel ledit ensemble de base est un ensemble de codes de Walsh.

31. Récepteur selon la revendication 29, dans lequel ladite séquence modifiante est une séquence de Bent.

**32.** Récepteur selon la revendication 23, dans lequel le nombre desdits canaux de récepteurs multiples n'est pas une puissance de deux.

**33.** Récepteur selon la revendication 23, dans lequel lesdits ensembles de séquences de poids mutuellement orthogonales sont des séquences de Fourier.

**34.** Récepteur selon la revendication 29, dans lequel un premier et un second flot de symboles d'information sont décodés en désétalant le signal à étalement de spectre en utilisant des codes de désétalement respectifs dans le même canal de fréquence choisi à partir du même ensemble de ladite pluralité d'ensembles de codes à étalement de spectre mutuellement orthogonaux et en réalisant une combinaison pondérée en utilisant les séquences de poids respectives choisies à partir d'ensembles différents de ladite pluralité d'ensembles de séquences de poids mutuellement orthogonales.

**35.** Récepteur selon la revendication 23, dans lequel lesdits désétaleurs désétalent de multiples raies du signal reçu dans chaque canal de fréquence correspondant aux multiples chemins de propagation relativement retardés pour produire de multiples raies désétalées.

**36.** Récepteur selon la revendication 35, dans lequel les raies désétalées provenant du même canal de fréquence sont combinées en pondérant avec les complexes conjugués des évaluations de canal de propagation correspondant aux raies.

**37.** Récepteur selon la revendication 36, dans lequel lesdites évaluations de canal de propagation sont obtenues en corrélant le signal reçu avec un code pilote dans chaque canal de fréquence.

**38.** Récepteur selon la revendication 36, dans lequel chaque élément de la séquence de poids utilisée pour combiner les signaux provenant de différents canaux de fréquence incorpore un ajustement par l'inverse de la somme des magnitudes au carré desdites évaluations de multiplieurs de propagation correspondant aux raies de manière à préserver l'orthogonalité entre les signaux utilisant différentes séquences de poids provenant du même ensemble orthogonal.

**39.** Récepteur selon la revendication 35, dans lequel lesdites multiples raies désétalées provenant du même canal de fréquence sont ordonnées suivants la force du signal et les raies désétalées de même ordre de force de signal sont sélectionnées pour être combinées en utilisant la séquence de poids choisie pour le flot de symboles à décoder.

**40.** Récepteur selon revendication 37, dans lequel ladite séquence de poids choisie incorpore un ajustement utilisant l'inverse d'une évaluation de canal de propagation pour la raie correspondante de manière à préserver l'orthogonalité entre des signaux utilisant des séquences de poids différentes choisies à partir du même ensemble mutuellement orthogonal de séquences de poids.

**41.** Récepteur selon la revendication 39, dans lequel chaque combinaison de raies de même ordre de force de signal est de plus combinée en pondérant avec la somme des carrés des magnitudes des raies combinées.

**42.** Récepteur selon la revendication 37, dans lequel ladite séquence de poids choisie incorpore un ajustement utilisant le conjugué d'une évaluation de canal de propagation pour la raie correspondante de manière à optimiser le rapport signal sur bruit.

**43.** Récepteur selon la revendication 39 dans lequel ladite séquence de poids choisie incorpore un ajustement utilisant un nombre complexe se situant entre le conjugué et l'inverse d'une évaluation de canal de propagation pour la raie correspondante de manière à maximiser le rapport entre la partie utile du signal combiné et la partie nuisible comprenant le bruit et les interférences dus à l'imperfection de l'orthogonalité.

**44.** Récepteur selon la revendication 43, dans lequel les signaux combinés correspondant à des raies de même ordre de force de signal provenant de canaux de fréquence différents sont de plus combinés en utilisant des facteurs de pondération pour optimiser de plus le rapport signal utile sur bruit plus interférence.

**45.** Émetteur à canaux de fréquences multiples pour signaux à Accès Multiples par Répartition de Codes (CDMA), ledit émetteur comprenant :

un codeur à étalement de spectre (48a à 48n) utilisant une pluralité d'ensembles de codes à étalement de spectre orthogonaux (50a à 50n), chaque code dans un ensemble donné étant orthogonal à tous les codes dans le même ensemble mais n'étant pas orthogonal à tous les codes d'un ensemble différent, le codeur à étalement de spectre combinant l'un différent d'une pluralité de symboles d'information codés avec correction d'erreur (46a à 46n) avec un code choisi à partir d'un ensemble choisi différent pour produire un ensemble de signaux à étalement de spectre (52a à 52n) ;

une pluralité d'ensembles de multiplieurs de pondération (Waa... Wan-Wna... Wnn) chaque ensemble étant utilisé pour pondérer l'un différent d'un ensemble de signaux à étalement de spectre (52a à 52n) en vue d'une transmission utilisant une pluralité de canaux de fréquence pour transmettre chaque signal à étalement de spectre, chaque ensemble de multiplieurs utilisant une séquence de poids choisie à partir d'un d'une pluralité d'ensembles de séquences de poids orthogonales, les multiplieurs sortant des signaux d'information pondérés (56aa... 56an-56na... 56nn) ; et

une pluralité de combineurs (58a à 58n), chacun d'eux étant configuré pour combiner les signaux d'information pondérés (56aa... 56an-56na ... 56nn) qui sont pondérés pour le même canal de fréquence d'une pluralité de canaux de fréquences pour produire des signaux d'information pondérés combinés (60a à 60n) pour chacun d'une pluralité de canaux de fréquence.

46. Procédé de transmission à canaux de fréquences multiples pour signaux à Accès Multiples par Répartition de Codes (CDMA), ledit procédé comprenant les étapes suivantes :

le codage par étalement de spectre (48a à 48n) utilisant une pluralité d'ensembles de codes à étalement de spectre orthogonaux (50a à 50n), chaque code dans un ensemble donné étant orthogonal à tous les codes dans le même ensemble mais n'étant pas orthogonal à tous les codes dans un ensemble différent, en combinant l'un différent d'une pluralité de symboles d'information codés avec correction d'erreur (46a à 46n) avec un code choisi à partir d'un item différent choisi parmi les ensembles de codes à étalement de spectre orthogonaux pour produire un ensemble de signaux à étalement de spectre (52a à 52n) ;

la pondération de l'un différent de l'ensemble des signaux à étalement de spectre (52a à 52n) en vue d'une transmission utilisant une pluralité de canaux de fréquence pour transmettre chaque signal à étalement de spectre, la pondération utilisant une séquence de poids choisie à partir de l'un d'une pluralité d'ensembles de séquences de poids orthogonales pour fournir des signaux d'information pondérés (56aa... 56an-56na... 56nn) ; et

la combinaison des signaux d'information pondérés (56aa... 56an-56na... 56nn) qui sont pondérés pour le même canal de fréquence d'une pluralité des canaux de fréquence pour produire des signaux d'information pondérés combinés (60a à 60n) pour chacun de la pluralité des canaux de fréquence.

Fig. 1
(Prior Art)

# Fig. 2

EP 1 195 013 B1

## Fig. 3

SOURCE AND ERROR CODING

SOURCE AND ERROR CODING

ACCESS CODE

ACCESS CODE

SPREAD-SPECTRUM CODING

SPREAD-SPECTRUM CODING

EP 1 195 013 B1

EP 1 195 013 B1

*Fig. 4*

SIGNAL a →

| SOURCE AND ERROR CODING, WEIGHTING & COMBINING FOR FIRST n SIGNALS $\underline{78a}$ |

SIGNAL n →

80a → | SPREAD-SPECTRUM CODING USING e.g. CODE 00111100 $\underline{84a}$ |

80n → | SPREAD-SPECTRUM CODING USING e.g. CODE 00111100 $\underline{84n}$ |

88a

88n

→ 76

Σ 92a → 94a

SIGNAL n+1 →

| SOURCE AND ERROR CODING, WEIGHTING & COMBINING FOR SECOND n SIGNALS $\underline{78b}$ |

SIGNAL 2n →

82a → | SPREAD-SPECTRUM CODING USING e.g. CODE 10010110 $\underline{86a}$ |

82n → | SPREAD-SPECTRUM CODING USING e.g. CODE 10010110 $\underline{86n}$ |

90a

90n

Σ 92n → 94n

*Fig. 5*

SIGNAL 1

⋮

SIGNAL n

SOURCE AND ERROR CODING, WEIGHTING & COMBINING FOR FIRST n SIGNALS
*78a*

*80a*

*80n*

SPREAD-SPECTRUM CODING USING e.g. CODE 00111100
*84a'*

⋮

SPREAD-SPECTRUM CODING USING e.g. CODE 10010110
*84n'*

*88a'*

*88n'*

*92a*

*94a'*

Σ

*76'*

SIGNAL n+1

⋮

SIGNAL 2n

SOURCE AND ERROR CODING, WEIGHTING & COMBINING FOR SECOND n SIGNALS
*78b*

*82a*

*82n*

SPREAD-SPECTRUM CODING USING e.g. CODE 10010110
*86a'*

⋮

SPREAD-SPECTRUM CODING USING e.g. CODE 00111100
*86n'*

*90a'*

*90n'*

*92n*

*94n'*

Σ

EP 1 195 013 B1

30

# Fig. 6

SIGNAL 1 →

SIGNAL n →

SOURCE AND ERROR CODING, WEIGHTING & COMBINING FOR FIRST n SIGNALS
*78a*

*80a*

*80n*

SPREAD-SPECTRUM CODING USING e.g. CODE 00111100
*84a"*

*88a"*

SPREAD-SPECTRUM CODING USING e.g. CODE 11101000
*84n"*

*88n"*

*76"*

Σ → *94a"*
*92a"*

SIGNAL n+1 →

SIGNAL 2n →

SOURCE AND ERROR CODING, WEIGHTING & COMBINING FOR SECOND n SIGNALS
*78b*

*82a*

*82n*

SPREAD-SPECTRUM CODING USING e.g. CODE 10010110
*86a"*

*90a"*

SPREAD-SPECTRUM CODING USING e.g. CODE 10110001
*86n"*

*90n"*

Σ → *94n"*
*92n*

EP 1 195 013 B1

Fig. 7

60a,74a, 94a, 94a', 94a"

60n,74n, 94n, 94n', 94n"

I,Q MODULATOR

96

98n

98a

100

102

EP 1 195 013 B1

32

Fig. 8

Fig. 9